# EUROPEAN PATENT SPECIFICATION

(11) **EP 0 705 281 B1**
(45) Date of publication and mention of the grant of the patent: **11.03.1998**
(21) Application number: 94919175.3
(22) Date of filing: 20.05.1994
(51) Int. Cl.: C08F 4/602, C08F 10/00

(54) **SUPPORTED METALLOCENE CATALYST SYSTEMS FOR THE POLYMERIZATION OF OLEFINS, PREPARATION AND USE THEREOF**
METALLOCEN-KATALYSATORSYSTEME AUF EINEM TRÄGER FÜR DIE OLEFINPOLYMERISATION, IHRE HERSTELLUNG UND VERWENDUNG
SYSTEMES DE CATALYSEURS A BASE D'ALLIAGE ORGANOMETALLIQUE SUR SUPPORT POUR LA POLYMERIZATION D'OLEFINES, ET LEUR PREPARATION ET UTILISATION

(30) Priority: 25.05.1993 US 66740
(43) Date of publication of application: 10.04.1996
(73) Proprietor: EXXON CHEMICAL PATENTS INC., Baytown, TX 77520-2149 (US); HOECHST AKTIENGESELLSCHAFT, 65926 Frankfurt am Main (DE)
(72) Inventor: BURKHARDT, Terry, John, Kingwood, TX 77345 (US); BRINEN, Jeffrey, Lawrence, League City, TX 77573 (US); HLATKY, Gregory, George, Katy, TX 77450 (US); SPALECK, Walter, D-65835 Liederbach (DE); WINTER, Andreas, D-61479 Glashütten/Taunus (DE)
(74) Representative: Dew, Melvyn John
(86) International application number: US9405636
(87) International publication number: WO9428034

(56) References cited:
- EP-A- 0 485 822
- EP-A- 0 518 092
- EP-A- 0 563 917
- EP-A- 0 566 349
- EP-A- 0 576 970

## Description

### FIELD OF THE INVENTION

The invention relates to catalyst systems and more particularly to prepolymerized supported metallocene/alumoxane catalyst systems useful for the polymerization of olefins or mixtures of olefins to polyolefins. It is especially useful for the production of granular isotactic polymers of propylene of high molecular weight and high melting point.

### BACKGROUND OF THE INVENTION

Supported catalyst systems are well known.

Techniques to support a catalyst system vary widely. For example techniques employing hydrated carriers or supports are disclosed in EPA 367503, EPA 336593, and US 4912075; techniques employing varying types of inert carriers and metallocenes are disclosed in US 4659685. US 4808561 and US 4701432 describe techniques wherein the carrier is calcined and subsequently contacted with the metallocene and activator or cocatalyst component.

Methods are known in the art to obtain polymer product having uniform compact spherical particles, narrow particle size distribution and/or high bulk density with supported catalysts EPA 302424 and EPA 354893 describe preactivating or precontacting the metallocene and activator; EPA 426646 and US 4871705 describe prepolymerizing a supported catalyst system in the presence of at least one olefin; EPA 279586 describes utilizing finely divided alumoxane to yield a powdery polymer; and EPA 314797 describes utilizing a supported catalyst system and fillers in the system with affinities for polyolefins EPA 518 092 describes supporting a catalyst system on a fine particled polymerisate.

Prior art supporting techniques generally produce a catalyst system whose catalytic performance is inferior compared to its unsupported counterpart. The activity of the resulting supported catalyst is less than the activity of the unsupported catalyst system. The resultant polymer generally has a lower molecular weight and/or lower melting point. Any advantages gained with respect to polymer morphology employing pnor art supported catalvst had to be balanced against the counterproductive effects due to fouling, fining, sheeting and chunking which generally were observed in the polymerization reactor of gas phase, bulk or slurry polymerization processes.

It is well known that lower polymerization reaction temperatures could raise melting point and molecular weight of the polymer produced, but lowering the polymerization reaction temperature is not always practical. Supported catalyst systems which can operate at high reaction temperatures, i.e., those greater than 60°C, are commercially attractive since they generally allow for increased catalyst activity and the absence of special refrigeration conditions to remove the resultant heat of reaction liberated during polymerization. When employing supported catalysts, considerations such as catalyst activity, and polymerization reaction conditions as well as the resultant polymer molecular weight and melting point must be taken into account.

Homogeneous or nonsupported metallocene catalyst systems are known for use in the production of high molecular weight, high melting point, narrow molecular weight distribution stereoregular polymers. For example, EP-A-0485822 discloses that substituted bisindenvl zirconocenes and aiumoxane activators are suitable catalyst systems for the production of isotactic, high melting point, high molecular weight, narrow molecular weight distribution polymer. Some of these catalyst systems have been found to be highly active catalyst systems. As discussed above however, once placed onto inert carriers using prior art techniques, these catalyst systems tend to suffer loss of activity and the ability to produce polymer of high molecular weight and/or high melting point.

To summarize the background of the invention, there exist metallocene catalyst systems which are highly active and produce high molecular weight, high melting point, narrow molecular weight distribution stereoregular polymer. There exist supporting techniques to place metallocenes on inert carriers. However, when employing prior art supporting techniques with prior art highly active catalyst systems for production of stereoregular polymers, a supported catalyst system results which exhibits poor catalytic activity compared to its nonsupported counterpart. The prior art catalyst systems generally produce a polymer with decreased melting point, and molecular weight relative to that produced with the analogous nonsupported catalyst system.

A need exists to develop a supported catalyst system which produces a granular, highly isotactic polyolefin having a high melting point of 140°C or greater, a molecular weight of 100000 or greater and a narrow molecular weight distribution. Molecular weight is defined herein as weight average molecular weight, and molecular weight distribution (MWD) is defined as the ratio of weight average molecular weight to number average molecular weight (M_{w}/Mₙ). In order to be commercial attractive, the catalyst system must produce little to no reactor fouling or sheeting and maintain its stability over a sufficient period of time to allow for storage and transport of the supported catalyst if necessary.

### SUMMARY OF THE INVENTION

The present invention relates to group 4, 5, or 6 transition metal prepolymerized supported metallocene/alumoxane catalyst systems, being useful for the polymerization of propylene to isotactic polypropylene or propylene copolymers. The granular isotactic polypropylene, homo- or copolymers thereof, generally have a narrow molecular weight distribution of 2.5 or less, a melting point of 140°C or greater, a molecular weight of 10000 grams/mole (g/m) or greater, a bulk density of 0.30 g/cm³ or greater and an average particle size of 500 to 1000 microns (1 micron = 1 µm) or greater. The inventive supported catalyst can be employed in gas phase, bulk, solution, or slurry polymerization processes, at reaction temperatures in excess of 45°C.

Catalyst systems supported by the inventive process have been found to retain catalytic performance or properties similar to their unsupported counterpart. The performance characteristics include activity, the ability to produce polymer with melting point, molecular weight and morphology similar to that produced with the unsupported counterpart. Additionally, the supported catalyst systems were found to produce little to no fouling, fines, or chunking in the reactor.

### DESCRIPTION OF PREFERRED EMBODIMENTS

The present invention provides a supported catalyst system and method to make and use the same, comprising a metallocene, preferably a biscylopentadienyl derivative of a group 4, 5, or 6 transition metal, an aluminum alkyl activator such as alumoxane, and a porous inorganic support. The invention more specifically provides a supported catalyst system prepared by supporting the reaction product of one or more metallocenes, as described herein, and alumoxane on an inorganic porous support, and, optionally prepolymerized olefinic monomer(s). A process for preparing these catalyst systems is provided, as well as a process for forming homo- or copolymers of isotactic polypropylene from the catalyst system. The supported catalyst system is especially useful in the production of polymers of propylene, particularly granular isotactic polypropylene having high molecular weight, high melting point, and a bulk density in the range of 0.30 to 0.45 g/cm³ or greater. The resulting isotactic polypropylene is free flowing, and easy to store and transport.

As used herein the terms "carrier" and "support" are interchangeable and are intended to refer to any structure which can serve as a foundation for maintaining a catalyst component or catalyst system. Metallocene is defined as a derivative of a pi-boding moiety such as a cyclopentadienyl (Cp) moiety or derivative thereof, or an ancillary ligand which will coordinate with a transition metal. The transition metal employed is a group 4, 5, or 6 metal, preferably group 4, and most preferably is zirconium (Zr). The Periodic Table of Elements referred to herein is that as described as the New IUPAC notation in Hawley's Condensed Chemical Dictionary, Eleventh Edition, revised by Sax and Lewis, Van Nostrand Reinhold, New York, 1987. Metallocene products are broadly disclosed in US-A-5017714 and EP-A-129368.

According to the invention there is provided a supported catalyst system prepared by the method comprising (a) supporting on an inorganic porous support the reaction product of one or more metallocenes and alumoxane, said reaction product obtained by contacting said metallocene component(s) and alumoxane in a suitable solvent, said metallocene components having the following general structure: 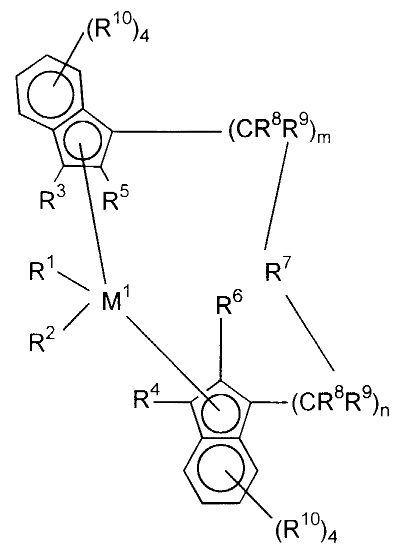 wherein:
M¹ is a metal of group 4, 5, or 6 of the Periodic Table, for example titanium, zirconium, hafnium, vanadium niobium, tantalum, chromium, molybdenum and tungsten, preferably, zirconium, hafnium and titanium, most preferably zirconium;
R¹ and R² are identical or different, are one of a hydrogen atom, a C₁-C₁₀ alkyl group, preferably a C₁-C₃ alkyl group, a C₁-C₁₀ alkoxy group, preferably a C₁-C₃ alkoxy group, a C₆-C₁₀1 aryl group, preferably a C₆-C₈ aryl group, a C₆-C₁₀ aryloxy group, preferably a C₆-C₈ aryloxy group, a C₂-C₁₀ alkenyl group, preferably a C₂-C₄ alkenyl group, a C₇-C₄₀ arylalkyl group, preferably a a C₇-C₁₀ arylalkyl group, a C₇-C₄₀ alkylaryl group, preferably a C₇-C₁₂ alkylaryl group, a C₈-C₄₀ arylalkenyl group, preferably a C₈-C₁₂ arylalkenyl group, or a halogen atom, preferably chlorine;
R³ and R⁴ are hydrogen atoms;
R⁵ and R⁶ are identical or different, preferably identical, are one of a halogen atom, preferably a fluorine, chlorine or bromine atom, a C₁-C₁₀ alkyl group, preferably a C₁-C₄ alkyl group, which may be halogenated, a C₆-C₁₀ aryl group, which may be halogenated, preferably a C₆-C₈ aryl group, a C₂-C₁₀ alkenyl group, preferably a C₂-C₄ alkenyl group, a C₇-C₄₀ -arylalkyl group, preferably a C₇-C₁₀ arylalkyl group, a C₇-C₄₀ alkylaryl group, preferably a C₇-C₁₂ alkylaryl group, a C₈-C₄₀ arylalkenyl group, preferably a C₈-C₁₂ arylalkenyl group, a-NR₂¹⁵, -SR¹⁵, -OR¹⁵, -OSiR₃¹⁵ or -PR₂¹⁵ radical, wherein R¹⁵ is one of a halogen atom, preferably a chlorine atom, a C₁-C₁₀ alkyl group, preferably a C₁-C₃ alkyl group, or a C₆-C₁₀ aryl group, preferably a C₆-C₉ aryl group;
R⁷ is 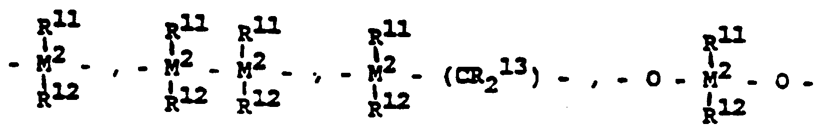 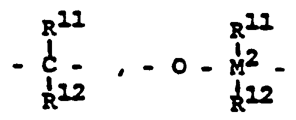 =BR^{11,}=AlR¹¹, -Ge-, -Sn-, -O-, -S-, = SO, =SO₂, =NR¹¹, =CO, PR¹¹, or =P(O)R¹¹;
   wherein:
   R¹¹, R¹² and R¹³ are identical or different and are a hydrogen atom, a halogen atom, a C₁-C₂₀ alkyl group, preferably a C₁-C₁₀ alkyl group, a C₁-C₂₀ fluoroalkyl group, preferably a C₁-C₁₀ fluoroalkyl group, a C₆-C₃₀ aryl group, preferably a C₆-C₂₀ aryl group, a C₆-C₃₀ fluoroaryl group, preferably a C₆-C₂₀ fluoroaryl group, a C₁-C₂₀ alkoxy group, preferably a C₁-C₁₀ alkoxy group, a C₂-C₂₀ alkenyl group, preferably a C₂-C₁₀ alkenyl group, a C₇-C₄₀ arylalkyl group, preferably a C₇-C₂₀ arylalkyl group, a C₈-C₄₀ arylalkenyl group, preferably a C₈-C₂₂ arylalkenyl group, a C₇-C₄₀ alkylaryl group, perferably a C₇-C₂₀ alkylaryl group or R¹¹ and R¹², or R¹¹ and R¹³, together with the atoms binding them, can form ring systems;
M² is silicon, germanium or tin, preferably silicon or germanium, most preferably silicon;
R⁸ and R⁹ are identical or different and have the meanings stated for R¹¹;
m and n are identical or different and are zero, 1 or 2, preferably zero or 1, m plus n being zero, 1 or 2, preferably zero or 1; and
the radicals R¹⁰ are identical or different and have the meanings stated for R¹¹, R¹² and R¹³. Two adjacent R¹⁰ radicals can be joined together to form a ring system, preferably a ring system containing from about 4-6 carbon atoms.

Alkyl refers to straight or branched chain substitutents. Halogen (halogenated) is fluorine, chlorine, bromine or iodine atoms, preferably fluorine or chlorine.

Particularly preferred metallocenes are compounds of formulae: 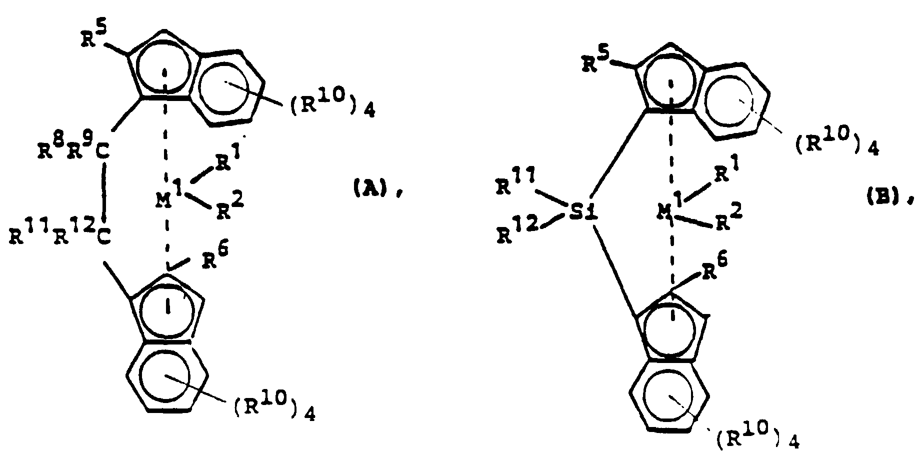 wherein:
M¹ is Zr or Hf, R¹ and R² are methyl or chlorine, and R⁵, R⁶ R⁸, R⁹,R¹⁰, R¹¹ and R¹² have the above-mentioned meanings.

The chiral metallocenes are used as a racemate for the preparation of highly isotactic poly-1-olefins.

It is also possible to use the pure R or S form. An optically active polymer can be prepared with these pure stereoisomeric forms. It is preferred that the meso form of the metallocenes be removed to ensure the center (i.e., the metal atom) provides stereoregular polymerization.

Separation of the stereoisomers can be accomplished by known literature techniques. For special products it is also possible to use rac/meso mixtures.

Generally, the metallocenes are prepared by a multi-step process involving repeated deprotonations/metallations of the aromatic ligands and introduction of the bridge and the central atom by their halogen derivatives. The following reaction scheme illustrates this generic approach:

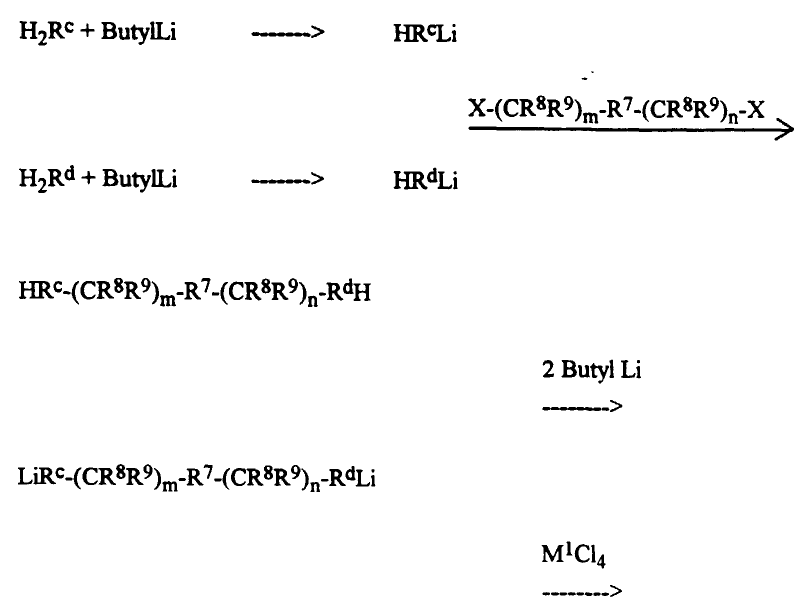

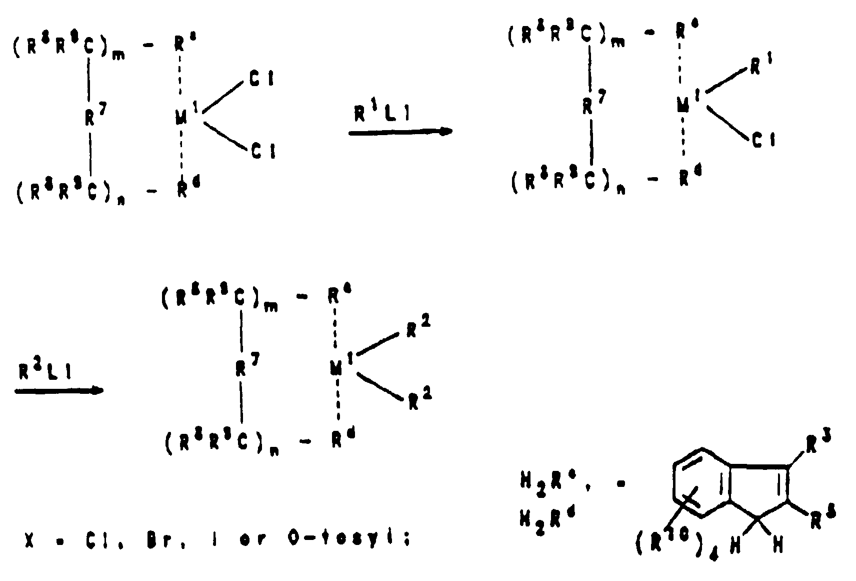

The reader is referred to the illustrative Examples herein, the Journal of Organometallic Chem., 288, (1958), 63-67, and EP-A- 320762, for preparation of the metallocenes described. JOCS and the EPA '762 are herein incorporated by reference in their entirety.

Illustrative but non-limiting examples of metallocenes include:
Dimethylsilandiylbis (2-methyl-4-phenyl-1-indenyl)ZrCl₂
Dimethylsilandiylbis(2-methyl-4,5-benzoindenyl)ZrCl₂;
Dimethylsilandiylbis(2-methyl-4,6-diisopropylindenyl)ZrCl₂;
Dimethylsilandiylbis(2-ethyl-4-phenyl-1-indenyl)ZrCl₂;
Dimethylsilandiylbis (4-naphthyl-1-indenyl)ZrCl₂,
Phenyl(Methyl)silandiylbis(2-methyl-4-phenyl-1-indenyl)ZrCl₂,
Dimethylsilandiylbis(2-methyl-4-(1-naphthyl)-1-indenyl)ZrCl₂,
Dimethylsilandiylbis(2-methyl-4-(2-naphthyl)-1-indenyl)ZrCl₂,
Dimethylsilandiylbis(indenyl)ZrCl₂,
Dimethylsilandiylbis(2-methyl-4,5-diisopropyl-1-indenyl)ZrCl₂,
Dimethylsilandiylbis(2,4,6-trimethyl-1-indenyl)ZrCl₂,
Phenyl(Methyl)silandiylbis(2-methyl-4,6-diisopropyl-1-indenyl)ZrCl₂,
1,2-Ethandiylbis(2-methyl-4,6-diisopropyl-1-indenyl)ZrCl₂,
1,2-Butandiylbis(2-methyl-4,6-diisopropyl-1-idenyl)ZrCl₂,
Dimethylsilandiylbis(2-methyl-4-ethyl-1-indenyl)ZrCl₂,
Dimethylsilandiylbis(2-methyl-4-isopropyl-1-indenyl)ZrCl₂,
Dimethylsilandiylbis(2-methyl-4-t-butyl-1-indenyl)ZrCl₂,
Phenyl(Methyl)silandiylbis(2-methyl-4-isopropyl-1-indenyl)ZrCl₂,
Dimethylsilandiylbis(2-ethyl-4-methyl-1-indenyl)ZrCl₂,
Dimethylsilandiylbis(2,4-dimethyl-1-indenyl)ZrCl₂,
Dimethylsilandiylbis(2-methyl-4-ethyl-1-indenyl)ZrCl₂,
Dimethylsilandiylbis(2-methyl-α-acenaphth-1-indenyl)ZrCl₂,
Phenyl(Methyl)silandiylbis(2-methyl-4,5-benzo-1-indenyl)ZrCl₂,
Phenyl(Methyl)silandiylbis(2-methyl-4,5-(methylbenzo)-1-indenyl)ZrCl₂,
Phenyl(Methyl)silandiylbis(2-methyl-4,5-(tetramethylbenzo)-1-indenyl)ZrCl₂,
Phenyl(Methyl)silandiylbis(2-methyl-α-acenaphth-1-indenyl)ZrCl₂,
1,2-Ethandiylbis(2-methyl-4,5-benzo-1-indenyl)ZrCl₂,
1,2-Butandiylbis(2-methyl-4,5-benzo-1-indenyl)ZrCl₂,
Dimethylsilandiylbis(2-methyl-4,5,benzo-1-indenyl)ZrCl₂,
1,2-Ethandiylbis(2,4,7-trimethyl-1-indenyl)ZrCl₂,
Dimethylsilandiylbis(2-methyl-1-indenyl)ZrCl₂,
1,2-Ethandiylbis(2-methyl-1-indenyl)ZrCl₂,
Phenyl(Methyl)silandiylbis(2-methyl-1-indenyl)ZrCl₂,
1,2-Butandiylbis(2-methyl-1-indenyl)ZrCl₂,
Dimethylsilandiylbis(2-ethyl-1-indenyl)ZrCl₂,
Dimethylsilandiylbis(2-methyl-5-isobutyl-1-indenyl)ZrCl₂,
Phenyl(Methyl)silandiylbis(2-(2-methyl-5-isobutyl-1-indenyl)ZrCl₂,
Dimethylsilandiylbis(2-methyl-t-butyl-1-indenyl)ZrCl₂ and
Dimethylsilandiylbis(2,5,6-trimethyl-1-indenyl)ZrCl₂.

A similar list of illustrative bis indenyl species comprising various other metals could be made, but since the lists would be nearly identical to that already presented, such lists are not deemed essential to a complete disclosure. It is apparent to those skilled in the art that other cyclopentadienyl derivatives, and transition metals other than zirconium, would be useful in the compositions of this invention.

### B. Activator Component

The activator or cocatalyst component of the present invention is alumoxane represented by the general formula: 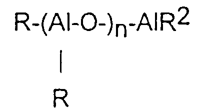 for oligomeric, linear alumoxane and 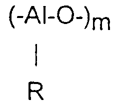 for oligomeric, cyclic alumoxane, wherein n and m = 1-40, most preferably 3-20, and R is a C₁₋₈ alkyl group or R is an C₆₋₁₈ aryl group, or hydrogen, preferably a methyl group, or R can be mixtures of alkyl and aryl substituents.

The precise structure of alumoxane is unknown. Alumoxane or methylalumoxane can be prepared by a variety of known processes. Whatever process employed to produce the alumoxane, a varying content of unconverted original aluminum compound, in free form or as an adduct, is common to all alumoxane solutions.

### C. Support Medium

Typically the support can be any inorganic, inert solid, particularly, porous supports such as talc, inorganic oxides, and resinous support materials such as polyolefin or materials which may be employed as supports as described in EPA 519236.

Suitable inorganic oxide materials which are desirably employed include oxides of elements found in groups 2, 3, 4, 5, 13, 14, 15, 16 of the Periodic Table of Elements. Examples of oxides include silica, alumina, silica-alumina, and mixtures thereof. Other inorganic oxides that may be employed either alone or in combination with the silica, alumina or silica-alumina mixtures are magnesia, titanium and zirconia.

If the carrier is naturally low in moisture content, or residual solvent content, dehydration or drying may not be necessary prior to use. However, if this is not the case, such as if employing a silica support, dehydration or drying is suggested. It is preferred that the carrier employed have 1% loss on ignition (LOI) or less of water or moisture. To achieve the preferred LOI, thermal dehydration or drying treatment of the carrier may occur in vacuum or while purging with a dry inert gas such as nitrogen at a temperature of from 100°C to 1000°C, and preferably, form 300°C to 800°C. Pressure considerations are not critical. Generally, however, ambient conditions are employed. The duration of thermal treatment can be from 1 to 24 hours. However, shorter or longer times can be employed provided equilibrium is established with the surface hydroxyl groups; this is generally accomplished within 4-8 hours.

Dehydration or drying of the support can also be accomplished by subjecting the carrier to a chemical treatment in order to remove water and reduce the concentration of surface hydroxyl groups. Chemical treatment coverts all water and hydroxyl groups in the oxide surface to inert species. Useful chemical agents are for example, chlorosilanes such as SiCl₄, trimethylchlorosilane, dimethylaminotrimethylsilane and the like. The chemical dehydration is accomplished by slurrying the inorganic particulate material such as, silica, in an inert low boiling hydrocarbon, such as hexane. During the chemical dehydration treatment, the silica should be maintained in a moisture and oxygen free atmosphere. To the silica slurry is then added a low boiling inert hydrocarbon solution of the chemical dehydrating agent, such as, dichlorodimethylsilane. The solution is added slowly to the slurry. The temperature ranges during chemical dehydration reaction can be from 25°C to 120°C, however, higher and lower temperatures can be employed. Preferably, the temperature will be from 50°C to 70°C. The chemical dehydration procedure should be allowed to proceed until all the moisture is removed from the particulate support material as indicated by cessation of gas evolution. Normally, the chemical dehydration reaction will be allowed to proceed from 30 minutes to 16 hours, preferably, 1 to 5 hours. Upon completion of the chemical dehydration, the solid particulate material is filtered under a nitrogen atmosphere and washed one or more times with a dry, oxygen free inert solvent. The wash solvents as well as the diluents employed to form the slurry and the solution of chemical dehydrating agent, can be any suitable inert hydrocarbon. Illustrative of such hydrocarbons are heptane, hexane, toluene, isopentane and the like.

Characteristics that determine the amount of support to be employed in preparing the catalyst compositions, as well as affecting the properties of polymers formed include specific particle size, surface area, pore volume, and number of hydroxyl groups. Preferred carriers include silica or those having 10-500 square meters/g or a porosity of 0.2-3.5 cm³ of pore volume/grams support (cm³/g).

Organic supports, such as polystyrene, may be employed and are also suggested to contain minimal to no moisture, residual solvent from processing, or impurities which may affect the final catalyst systems' performance.

### D. Placing Catalyst System on Support Medium

The general support technique employed involves contacting, in a suitable solvent, a metallocene component as described above with alumoxane or methylalumoxane to form a soluble reaction product. The soluble reaction product is then contacted with the dehydrated support or carrier, the solvent removed and the resulting supported catalyst system dried to ensure essentially all or most residual solvent is removed from the pores of the carrier. A free flowing catalyst system is obtained.

A method to produce a free flowing, prepolymerized support catalyst system thus comprises the steps of:
a) forming in a suitable solvent, a metallocene/alumoxane mixture wherein the metallocene is as described above;
b) contacting the mixture of (a) with a porous, inorganic dehydrated carrier;
c) removing essentially all the solvent from the resulting slurry;
d) obtaining a supported catalyst system: and
e) optionally prepolymerizing said support catalyst system with one or more olefinic monomer(s), thus forming a prepolymerized supported catalyst system for the production of polymers of propylene or copolymers thereof, having a molecular weight of 100000 or greater, preferably 150000 or greater, a melting point of 140°C or greater, preferably 145°C or greater, and a bulk density of 0.30 g/cm³ or greater. The resulting granular polymer also has an average particle size of 500 to 1000 microns or greater.

At all times, the individual ingredients as well as the recovered supported catalyst component are protected from oxygen and moisture. Therefore, the reactions must be performed in an oxygen and moisture free atmosphere and the recovered supported catalyst is maintained and stored in an atmosphere which is moisture and oxygen free. Preferably, the reactions are performed in the presence of an inert dry gas such as, for example nitrogen.

Preferred solvents for the contacting of the metallocene and activator include mineral oils and the various hydrocarbons which are liquid at reaction temperatures and in which the individual ingredients are preferably soluble. Solubility of the individual components however is not necessary provided that the reaction product of the metallocene and activator is soluble in the solvent chosen. Illustrative examples of useful or suitable solvents include alkanes such as pentane, isopentane, hexane, heptane, octane, and nonane; cycloalkanes such as cyclopentane and cyclohexane; and aromatics such as benzene, toluene, ethylbenzene and diethylbenzene.

The amount of alumoxane and metallocene employed in preparation of the supported catalyst system can vary over a wide range. However, an aluminum in the activator to transition metal in the metallocene molar ratio of from 12:1 to 1000:1; more preferably, a ratio of 50:1 to 500:1 is employed.

Typically 30 wt% MAO in toluene was employed in these studies, however 10 wt.% in toluene is acceptable.

In an embodiment of the present invention a toluene solution containing the metallocene is prepared to which is added a toluene solution of MAO (30 wt% in toluene). The amount of solvent should be sufficient to dissolve the reaction product, provide adequate heat transfer way from the catalyst components during the reaction and to permit good mixing. Alternatively, the same inert solvent or a different solvent may be employed to dissolve the metallocene and MAO. The metallocene solution is prepared and added to a prepared MAO solution and reacted at room temperature. The reaction between the MAO and the metallocene is rapid and it is desired that they are contacted for about one minute to one hour, preferably about ten minutes. The reaction of these two components is evidenced by its exothermic nature and a color change. However, the exotherm or color changes are not required and other analytical techniques may be employed to monitor completion of the reaction.

The soluble reaction products of the metallocene and activator are subsequently contacted with an inert carrier, typically silica, in dry form or as a slurry which slurry was prepared in the same or a different inert solvent. Preferably the silica is added dry. The ingredients can be added to the reaction vessel rapidly or slowly. Upon contact, a slurry is formed comprising the metallocene, alumoxane, and support which is preferably maintained at room temperature for one minute to one hour, most preferably five minutes. The temperature maintained during contact of the metallocene/MAO solution and carrier can vary widely, such as, for example, from 0°C to 100°C. However, temperatures of greater or less than 0-100°C can also be employed. The slurry or mixture may be stirred, with or without heat and essentially all or most of the solvent which is visually observed and essentially all that in the pore of the carrier. Removal of the solvent can occur via conventional manners such as evaporation by vacuum techniques, under reduced pressure, or flashing the mixture. Heating can be maintained until the free solvent has been removed, typically about one to three hours, at a temperature from 30°C to 60°C. Free liquid solvent is that which is visibly present in the reaction mixture. Residual solvent is that solvent which is trapped in the pores of the support.

An alternative embodiment to removal of essentially all of the solvent is to dry the support catalyst to a "mud" stage wherein substantially all the free liquid has been removed and subsequently wash the catalyst product with a low boiling hydrocarbon such as pentane or hexane. The supported catalyst system may then be further processed or employed in a polymerization reactor.

Although the supported catalyst may be employed as is, it is preferred to prepolymerize with one or more olefinic monomer, each having between 2 and 20 carbon atoms, preferably between 2-8 carbon atoms.

### E. Prepolymerization of Supported Catalyst

Prepolymerization of the supported catalyst reduces reactor fouling tendencies of the catalyst and has been found to enhance particle morphology control of the final polymer formed. Although one may use olefinic monomer between 2 and 20 carbon atoms, it is preferred that the supported catalyst be prepolymerized with ethylene or propylene monomer, most preferably ethylene. Alternatively, the supported catalyst may be prepolymerized with at least two different monomers having from 2-8 carbon atoms.

In an embodiment to prepolymerize the catalyst, the supported catalyst is slurried in isopentane or another hydrocarbon in which the metallocene or alumoxane is not soluble. Ethylene is added at a slow rate to the slurried mixture. The rate of addition is dependent upon the size of the reactor employed. Generally, when using laboratcry scale reactors, the rate of addition was 8.5-17x10⁻⁴m³/minutes (0.03-0.06 SCF/minute) with stirring (SCF-standard cubic feet).
After a suitable period of time to allow polymerisation of the ethylene monomer onto the supported catalyst, the prepolymerized catalyst is filtered through a mesh screen, decanted from the slurry mixture, washed with isopentane, dried under vacuum and the prepolymerized catalyst system is isolated. The prepolymerization typically occurs at a temperature of -15°C to 60°C, preferably less than 25°C for 10 minutes to 10 hours. The amount of prepolymer can be varied and generally comprises from 10% to 1000%, typically from 100% to 300% of the supported non-prepolymerized catalyst weight.

Generally the prepolymerized catalyst results in a catalyst particle size of 50 to 100 microns. The prepolymerized catalyst produced a resultant polymer with granular morphology, generally having a particle size of 500-1000 microns, and a bulk density in the range of 0.30 to 0.50 g/cm³ or greater.

Generally, the more active a catalyst system, the more difficult it is to produce a support catalyst system which retains its performance capabilities relative to its unsupported counterpart. The activity and polymerization performance of these supported bridged bis-indenyl derivative metallocenes was unexpected in view of their high activity in the unsupported format.

### F. Polymerization

All solvents were purchased from commercial sources, nitrogen purged and dried over activated molecular sieves. Aluminium alkyl reagents (MAO) were purchased as 10-30 wt% solutions in toluene from Witco Corporation, PO Box 1227, Dublin, Ohio, 43017. The silica employed was Davison 948, purchased from W.R. Grace, Davison Chemical Division, 5603 Chemical Rd., Baltimore, Md. 21226, USA, dehydrated to 800°C in a flow of nitrogen for approximately eight hours.

The prepolymerized supported catalyst product formed can be employed as a sole catalyst component fro the polymerization of olefins containing from 2 to 20 carbon atoms, or, in the preferred alternative, it can be employed with an aluminium alkyl or alumoxane additive (or scavenger). It is preferred to employ an additive during polymerization since enhanced catalyst activity and reduced reactor fouling is generally observed. The amount of additive in the reactor is related to feed monomer purity.

The general polymerization procedure is as follows. TEAL, used as an additive, was added to a clean, dry two litre autoclave which had been flushed with nitrogen. The reactor was closed and filled with 1000 mls of liquid propylene. The reactor was heated to the desired temperature, generally from 65°C and the supported, prepolymerized catalyst slurried in 2 mls of hexane, was washed in via an addition tube with 250 mls propylene. After the desired reaction time, generally 60 minutes, the reactor was cooled and the excess propylene vented. Inspection of the reactor revealed it to be clean and free of fouling, fines, or polymer chunks. The granular, free flowing polymer was removed and dried.

### G. Isotactic Polypropylene Product

Using the prepolymerized supported catalyst system described herein, granular, free flowing isotactic polypropylene was produced comprising (a) a molecular weight of 100000 grams/mole or greater, generally greater than 150000, (b) a melting point of from 140°C or greater, generally greater than 145°C, (c) a bulk density of 0.30 g/cm³ or greater, (d) a narrow molecular weight distribution of 2.5 or less and (e) a particle size of 500-1000 microns. Homo- or co-polymers of propylene, which include isotactic polypropylene or mixtures of isotactic polypropylene and one or more other olefins, may be produce in gas phase, bulk, solution, or slurry polymerization processes, employing the supported catalyst system described, at a reaction temperature of 45°C or greater, preferably from 60°C or greater. The resulting homo- or co-polymer of propylene can be used for preparing shaped articles, films and fibres.

The supported catalyst system in accordance with this invention provides the means to obtain highly attractive polymer product. The resultant polymers were unexpected in view of the problems generally associated with supporting highly active metallocenes.

A feature of the supported catalyst system, which is especially attractive to manufacturers, is its ability to minimize or eliminate chunking, sheeting, fines generation or reactor fouling during polymerization. Additionally a granular polymer product results from its use. These features are especially attractive to manufacturers since it minimizes or eliminates the need to shut down the reaction system to cleaning or frequent maintenance, or (2) further process the resultant polymer.

Table 1 illustrates catalyst preparation and polymerization performance of the catalyst for the production of isotactic polypropylene. The catalyst systems illustrated were prepolymerized with ethylene monomer at a temperature of from 25-60°C. The resulting polymer had a molecular weight greater than 100000 with a melting point 146°C or greater. Average bulk density of the polymer obtained was 0.45 g/cm³, with particle size greater than 500 microns.

Polymer characterizations were conducted by ASTM techniques such as DSC, GPC and elemental analysis. Melting points were determined on commercial DSC instruments and are reported as second melting point.

The advantages of the instant invention are extremely valuable from a practical and commercial standpoint. It has been demonstrated that one can support a metallocene such that the catalyst system retains much of the performance of its unsupported counterpart, and results in little to no reactor fouling during polymerization.

### EXAMPLES

The illustrative examples herein demonstrate the use of supported metallocene catalyst, for preparation of isotactic polypropylene.

### A. Synthesis of rac-dimethylsilandiylbis(2-methyl-4,5-benzoindenyl)-zirconium dichloride

### Diethyl methyl (2-naphthylmethyl)malonate (1)

5.15 g (224 mmol) of sodium were dissolved in 150 ml of absolute ethanol, while heating, and 37.3 ml (217 mmol) of diethyl methylmalonate were added at room temperature. A solution of 50 g (217 mmol) of 2-bromomethylnapthalene (96% pure) in 270 ml of ethanol was slowly added dropwise at 0°C, and the mixture was heated under reflux for a further 4 to 5 hours. It was poured onto ice-water and extracted with ethyl acetate. The combined organic phases were dried with sodium sulfate and evaporated. After drying under an oil pump vacuum, the oily residue was stirred with hexane at 0°C, whereupon 55 g (81%) of the compound 1 crystallized.

### Synthesis of 2-Methyl-3-naphthylpropionic acid (2)

A solution of 23.7 g (422 mmol) of potassium hydroxide in 50 ml of water was added to 33.2 g (105 mmol) of the compound 1 in 70 ml of ethanol. and the mixture was heated under reflux for 4 hours. After the solvent had been stripped off, the solid residue was taken up in ethyl acetate, water was added and the pH was brought to 1 with hydrochloric acid. The aqueous phase was extracted several times with ethyl acetate. After drying over magnesium sulfate, the combined organic phases were evaporated completely. The residue was stirred with hexane for crystallization. For decarboxylation, the beige-colored solid was heated at 175°C until the evolution of gas had ended. 21 g (94%) of the product 2 were obtained as a beige-colored solid.

### Synthesis of 2-Methyl-6,7-benzoindan-1-one (3)

22 ml of thionyl chloride were added to 21 g (98 mmol) of the compound 2, with exclusion of moisture, and the mixture was heated under reflux for 30 minutes. Excess thionyl chloride was then distilled off. The residue was briefly freed from volatile compounds under an oil pump vacuum and then dissolved in 25 ml of methylene chloride, under Ar as an insert gas. The solution was slowly added dropwise to a suspension of 26 g (196 mmol) of aluminum trichloride in 60 ml of methylene chloride and the mixture was heated under reflux for a further 30 minutes. It was poured onto ice and extracted with methylene chloride. The combined organic phases were dried with sodium sulfate and evaporated. The dark oily residue was chromatographed on 600 g of silica gel 60. 8.6 g (45%) of the compound 3 were able to be eluted (yellowish solid) with a mobile phase mixture of hexane/ethyl acetate (9:3).

### Synthesis of 2-Methyl-4,5-benzoindene (4)

2.2 g (59.5 mmol) of sodium borohydride were added in portions to a solution of 7.8 g (39.7 mmol) of the indanone, compound 3 in 400 ml of a tetrahydrofuran/methanol mixture (2:1) at room temperature, and the mixture was stirred for 14 hours. The solution was poured onto HCL-acid ice and extracted with ether. The combined organic phases were washed several times with water and dried with sodium sulfate. The orange-colored oil which remained after the solvent had been stripped off was dissolved in 240 ml of toluene, and the solution was heated at 80°C with 570 mg (3.15 mmol) of p-toluene-sulfonic acid for 15 minutes. It was washed several times with water at room temperature, dried with sodium sulfate and evaporated. The residue was chromatographed on 300 g of silica gel 60. 4.7 g (65%) of the indene 4 were able to be eluted (colorless oil) with a mobile phase mixture of hexane/diisopropyl ether (20:1).
¹H-NMR spectrum (360 MHz, CDCL₃): 8.02 (1,d), 7.84 (1,m), 7.59 (1,d), 7.52 (1,d), 7.38-7.48 (2,m), 7.06 (1,m), 3.42 (2,s), 2.25 (3,d).

### Synthesis of Dimethylbis(2-methyl-4,5-benzoindenyl) silane (5)

10.2 ml (25.5 mmol) of a 2.5 M butyllithium solution in hexane were added to a solution of 4.6 g (25.5 mmol) of the compound 4 in 50 ml of tetrahydrofuran at room temperature, and the mixture was heated under reflux for 1 hour. The red solution was then added dropwise to a solution of 1.55 g (12 mmol) of dimethyldichlorosilane in 10 ml of tetrahydrofuran at room temperature, and the mixture was heated under reflux for 5 to 6 hours. The reaction solution was poured onto ice-water and extracted several times with ether. The combined organic phases were dried with sodium sulfate and evaporated, and the residue was dried under an oil pump vacuum. It was chromatographed on 300g of silica gel 60. 500 mg of unreacted starting compound 4 were initially able to be eluted with a mobile phase mixture of hexane/3% ethyl acetate. The ligand system, compound 5, then followed with the same mobile phase. After the solvent had been stripped off, this ligand system was crystallized (isomers) from hexane. The yield was 1.7 g (34%, or 44% with respect to the indene, compound 4 reacted).

### Synthesis of rac - Dimethylsilanediylbis (2-methyl-4,5-benzo-indenyl) zirconium dichloride (6)

4.0 ml (10.2 mmol) of a 2.5 M butyllithium solution in hexane were added to a solution of 1.7 g (4.1 mmol) of compound 5 in 20 ml of tetrahyrofuran at room temperature under Ar as an inert gas, and the mixture was stirred at room temperature for 14 hours. The residue which remained after the solvent had been stripped off was dried using an oil pump vacuum and washed with hexane. The pale brown powder obtained was dried using an oil pump vacuum at 40 to 50°C for several hours and added to a suspension of 1.0 g (4.0 mmol) of zirconium tetrachloride in 25 ml of methylene chloride at -78°C. After the mixture had been warmed to room temperature, the solvent was stripped off and the residue was extracted with 20 ml of toluene in order to remove the meso form of the metallocene, compound 6. The residue of the toluene extract was then extracted with 40 ml of methylene chloride. The solution was concentrated to a small volume and left to crystallize at -35°C. A total of 970 mg (42%) of the ziroconcene, compound 6 were isolated in several fractions as the pure racemate. ¹H-NMR spectrum of the racemate (300 MHz, CDCL₃): 7.96 (2,m), 7.78 (2,m), 7.60 (2,d), 7.48-7.56 (4,m), 7.36 (2,d), 7.27 (2,s,b-Ind-H), 2.37 (6,s,Ind-CH3), 1.36 (6,s.Si-CH3). Mass spectrum: 574 M⁺, correct disintegration, correct isotope pattern.

### Supporting Catalyst Compound (6)

To an eight-liter vessel equipped with a cooling jacket and an efficient overhead stirrer was added methylalumoxane (30 wt% in toluene, 925 ml). With stirring, a suspension of compound 6 (5.0 g) in toluene (700 ml) was added under N₂ through a double-ended needle. After stirring for 10 minutes, dehydrated silica (Davison 948, dried at 800°C, 200 g) was added to the solution over 20 minutes. The slurry was stirred for 10 minutes and then, while a vacuum was applied from the top of the vessel, a slight flow of N₂ was added through the bottom . The mixture was heated to 70°C as the solvent was evaporated over a 9 hour period. The dry solid was cooled to ambient temperature overnight. Isopentane (5 liters) was added to slurry the solids and the mixture cooled to 0°C. Ethylene was added to the stirred mixture by a dip tube at a rate of 0.8496 - 1.6992 · 10⁻³ m³/Min. (0.03-0.06 SCF/minute) until a total of 491 liters of ethylene had been added. Agitation was stopped and the solids allowed to settle. The liquid was decanted from the solids, which were washed twice, each with 1.5 liters of isopentane. The wet solids were transferred to a dry-box under N₂ and filtered through a #14 mesh sieve. The fine particles were filtered off, washed with pentane (4 liters) and dried in vacuo. Yield: 326g.

### Polymerization with Supported Compound 6

A sample of the supported catalyst of compound 6 (199 mg) slurried in hexane (2 ml) was flushed with propylene (250 ml) into a 2 liter autoclave, previously flushed with nitrogen, heated to 65°C and containing triethylaluminum (0.5 ml of a 1 M solution in hexane) and propylene (1000 ml). The reaction was run for 1 hour. The autoclave was cooled, vented and opened. Inspection of the interior of the reactor revealed it to be clean and free of fouling. The polymer product was dried in vacuo. 305 g of a free flowing, granular isotactic polypropylene product were recovered. M_{w} of 273000, bulk density of 0.43 g/cc, and an average particle size of 750 microns.

### B. Synthesis of rac dimethylsilandiylbis-(2methylindenyl) - zirconium dichloride Synthesis of 2-Me-indene (7)

110.45 g (0.836 mol) of 2-indanone were dissolved in 500 cm³ of diethyl ether, and 290 cm³ of 3 N (0.87 mol) ethereal methyl Grignard solution were added dropwise at such a rate that the mixture refluxed gently. After the mixture had boiled for 2 hours under gentle reflux, it was transferred onto an ice/hydrochloric acid mixture, and a pH of 2-3 was established using ammonium chloride. The organic phase was separated off, washed with NaHCO₃ and sodium chloride solution and dried, yielding 98 g of crude product (2-hydroxy-2-methylindane (compound 7)), which was not purified further.

Compound 7 was then dissolved in 500 cm³ of toluene, 3 g of p-toluenesulfonic acid were added, and the mixture was heated on a water separator until the elimination of water was complete and evaporated. The residue was taken up in dichloromethane and the resulting solution filtered through silica gel. The filtrate was distilled in vacuo (80°C/10 mbar). Yield: 28.49 g (0.22 mol/26%).

The synthesis of compound (7) is also described in: C.F. Koelsch, P. R. Johnson, J. Am. Chem. Soc., 65 (1943) 567-573.

### Synthesis of (2-Me-indene)₂SiMe₂ (8)

13 g (100 mmol) of 2-Me-indene (compound 7) were dissolved in 400 cm³ of diethyl ether, and 62.5 cm³ of 1.6N (100 mmol) n-butyllithium/n-hexane solution were added dropwise over the course of 1 hour with ice cooling. The mixture was stirred at approximately 35°C for a further 1 hour.

6.1 cm³ (50 mmol) of dimethyldichlorosilane were introduced into 50 cm³ of Et₂O, and the lithio salt solution was added dropwise at 0°C over the course of about 5 hours, the mixture was stirred overnight at room temperature and left to stand over the weekend.
The solid which had deposited was filtered off, and the filtrate was evaporated to dryness. The product was extracted using small portions of n-hexane, and the extracts were filtered and evaporated, yielding 5.7 g (18.00 mmol) of white crystals. The mother liquor was evaporated, and the residue was then purified by column chromatography (n-hexane/H₂CCl₂ 9:1 by volume), giving a further 2.5 g (7.9 mmol/52%) of product (as an isomer mixture).
(SiO₂; n-hexane/H₂CCl₂ 9:1 by volume) = 0.37.
R_{f}(SiO₂; n-hexane/H₂CCl₂ 9:1 by volume) = 0.37.
The ¹H-NMR spectrum exhibits the signals expected for an isomer mixture with respect to shift and integration ratio.

### Synthesis of Me₂Si(2-MeInd)₂ZrCl₂ (9)

1.68 g (5.31 mmol) of the chelate ligand dimethylsilyl-(2-methylindene)2 (compound 8) were introduced into 50 cm³ of THF, and 6.63 cm³ of a 1.6 N (10.61 mmol) n-BuLi/n-hexane solution were added dropwise at ambient temperature over the course of about 0.5 hour. The mixture was stirred for about 2 hours at about 35°C, the solvent was stripped off in vacuo, and the residue was stirred with n-pentane, filtered off and dried. The dilithio salt obtained was added at -78°C to a suspension of 1.24 g (5.32 mmol) of ZrCl₄ in 50 cm³ of CH₂Cl₂, and the mixture was stirred at this temperature for 3 hours. The mixture was then warmed to room temperature overnight and evaporated. The ¹H-NMR spectrum showed, in addition to the presence of some ZrCl₄(THF)₂, a rac/meso mixture. After stirring with n-pentane and drying, the solid, yellow residue was suspended in THF, filtered and examined by NMR spectroscopy. After repeating these three steps several times, 0.35 g (0.73 mmol/14%) of product was obtained in which the rac form, according to ¹H-NMR, was enriched to more than 17:1.
Compound (9) exhibited a correct elemental analysis and the following NMR signals (CDCL₃, 100 MHz): d = 1.25 (s, 6H, Si-Me); 2.18 (s, 6H, 2-Me); 6.8 (s, 2H, 3-H-Ind); 6.92-7.75 (m, 8H, 4-7-H-Ind).

### Supporting Catalyst Compound (9)

To an eight-liter vessel equipped with a cooling jacket and an efficient overhead stirrer was added methylalumoxane (30 wt% in toluene, 925 ml). With stirring, a suspension of compound 9 (10 g) in toluene (700 ml) was added under N₂ through a double-ended needle. After stirring for 10 minutes, dehydrated silica (Davison 948, dried at 800°C, 200 g) was added to the solution over 20 minutes. The slurry was stirred for 10 minutes and then, while a vacuum was applied from the top of the vessel, a slight flow of N₂ was added through the bottom. The mixture was heated to 70°C as the solvent was evaporated over a 5 hour period. The dry solid was cooled to ambient temperature overnight. Isopentane (6.4 liters) was added to slurry the solids and the mixture cooled to 0°C. Ethylene was added to the stirred mixture by a dip tube at a rate of 2.5-3.4 liters/minute until a total of 392 liters of ethylene had been added. Agitation was stopped and the solids allowed to settle. The liquid was decanted from the solids, which were washed twice, each with 3 liters of isopentane. The wet solids were transferred to a dry-box under N₂ and filtered through a #14 mesh sieve. The sample was filtered, washed with pentane (4 liters) and dried in vacuo. Yield: 721 g.

### Polymerization with Supported Compound 9

The polymerization procedure of compound 6 was followed using 199 mg of supported compound 9. Inspection of the interior of the reactor revealed it to be clean and free of fouling. The yield of isotactic polypropylene was 143 g. M_{w} = 172000, bulk density = 0.36g/cm³, average particle size = 802 microns, MP= 147.9°C.

### C. Synthesis of rac-dimethylsilandiylbis(2-methyl-4,6-diisopropylindenyl)-zirconium dichloride

### Synthesis of 2-Methyl-5, 7-diisopropyl-1-indanone (10) and 2-methyl-4,6-diisopropyl-1-indanone (11)

174 g (1300 mmol) of AlCl₃ were slowly added to a solution of 84.8 g (523 mmol) of 1,3-diisopropylbenzene and 120 g (523 mmol) of 2-bromoisobutyryl bromide (98% pure) in 600ml of analytical grade methylene chloride via a solids metering funnel at room temperature. The mixture was heated under reflux for a further 20 hours and then worked up analogously to Example A. The crude product was chromatographed on 3 kg of silica gel 60. The indanones 10 and 11 were able to be eluted separately with a mobile phase mixture of hexane/15% ethyl acetate. The compound 2-methyl-5-isopropyl-1-indanone followed as a byproduct in a further zone with the same mobile phase. However, separation of the two isomers is not necessary for the further reactions. The overall yield was 93 g (78%). ¹H-NMR spectrum (360 MHz, CDCL₃): isomer mixture (3:2) 7.49 (d), 7.36 (d), 7.13 (s), 7.10 (s), 4.15 (septet), 3.25-3.40 (m), 3.10 (septet), 2.90-3.00 (m), 2.60-2.73 (m), 1.22-1.30 (m). Mass spectrum: 230 M⁺, correct disintegration pattern.

### Synthesis of 2-Methyl-4, 6-diisopropylindene (12) and 2-methyl-5,7-diisopropylindene (13)

19.3 g (511 mmol) of NaBH4 were added to a solution of 78.5 g (341 mmol) of the isomer mixture of 10 and 11 in 700 ml of a solvent mixture of tetrahydrofuran/analytical grade methanol (2:1) at room temperature. After the mixture had been stirred at room temperature for 2 hours, 120-130 ml of half concentrated HCI were added, and the mixture was extracted with ether. The combined organic phases were dried with Na₂SO₄. The residue which remained after the solvent had been stripped off was taken up in 500 ml of methylene chloride, and the mixture was heated under reflux with 6.5 g (34 mmol) of p-toluenesulfonic acid for 15 minutes. The residue which remained after the solvent had been stripped off was chromatographed on 1.5 kg of silica gel 60. 56 g of the isomer mixture of 12 and 13 were able to be isolated in the form of a colorless oil with a mobile phase mixture of hexane/diisopropyl ether 20:1. The overall yield was 86%.
¹H-NMR spectrum (100 MHz, CDCL₃): double bond isomers (1:1) 7.1 (m), 6.95 (m), 6.60 (m), 6.43, 3.25 (br), 2.75-3.20 (m), 2.12 (d), 1.28 (d), 1.25 (d). Mass spectrum: 214 M⁺, correct disintegration pattern.

### Synthesis of Dimethylbis (2-methyl-4,6-diisopropylindenyl) silane (14)

9.2 ml (22.8 mmol) of a 2.5 M butyllithium solution in hexane were added to a solution of 4.9 g (22.8 mmol) of the isomer mixture of 12 and 13 in 25 ml of tetrahydrofuran at 0°C under Ar as an inert gas, and the mixture was heated under reflux for a further hour. The red solution was then added dropwise to a solution of 1.5 g (11.4 ml) of dimethyldichlorosilane in 10 ml of tetrahydrofuran at room temperature, and the mixture was heated under reflux for 8 hours. The batch was poured onto ice-water and extracted with ether. The ether phase was dried over magnesium sulfate and evaporated under reduced pressure. The yellowish oil which remained was then chromatographed on 500 g of silica gel 60. 1.4 g of the indene mixture of 12/13 were able to be eluted first with a mobile phase mixture of hexane/5% methylene chloride. The ligand system followed with hexane/8% methylene chloride. The viscous oil which remained after the mobile phase had been stripped off was able to be crystallized by stirring with methanol in an icebath. 3.1 g of a yellowish solid were obtained. The yield was 56%, or 84% with respect to the indene reacted.
¹H-NMR spectrum (100 MHz, CDCL₃): double bond isomers (3:1) 6.82-7.32 (m), 6.70 (m), 6.62 (m), 6.52 (m), 3.75 (s,br), 3.65 (s,br), 3.35 (s), 2.70-3.30 (m), 2.05-2.25 (m), 1.10-1.45 (m), 0.10-0.22 (m), -0.15 to -0.32 (m).
Mass spectrum: 484 M⁺, correct disintegration.

### Synthesis of rac-Dimethylsilandiylbis (2-methyl-4,6-diisopropylindenyl)-zirconium dichloride (15)

6.3 ml (16.2 mmol) of a 2.5 M butyllithium solution in hexane were added to a solution of 3.1 g (6.5 mmol) of the ligand system of 14 in 25 ml of diethyl ether at room temperature under Ar as an inert gas, and the mixture was stirred overnight. After addition of 10 ml of hexane, the beige-colored suspension was filtered and the residue was washed with 20 ml of hexane. The dilithium salt was dried under an oil pump vacuum for a long time and then added to a suspension of 1.6 g (6.8 mmol) of ZrCl₄ in 30 ml of methylene chloride at -78°C. The mixture was warmed to room temperature in the course of 1 hour, and stirred at this temperature for a further 30 minutes. After the solvent had been stripped off, the orange-brown residue was extracted with 50 ml of hexane. After the solvent had been stripped off, 2.6 g (60%) of the complex 6 were obtained in the form of a yellow powder. The ratio of the racemate to the meso form was 3:1. 1.3 g (30%) of the complex 15 were obtained as the pure racemate (yellow crystalline powder) by recrystallization from hexane.
¹H-NMR spectrum (100 MHz, CDCl₃): 7.27 (2,s,aromatic-H), 7.05 (2,s,aromatic-H), 6.80 (2,s,b-Ind-H), 2.6-3.2 (4,m,i-Pr-CH), 2.22 (6,s,Ind-CH₃), 1.15-1.40 (30,m,i-Pr-CH₃,Si-CH₃). Mass spectrum: 642 M⁺ (with respect to ⁹⁰Zr), correct isotope pattern, correct disintegration.

### Supporting Catalyst Compound 15

A solution of complex 15 (102 mg) dissolved in toluene (7 ml) was added dropwise to a solution of 30% methylalumoxane in toluene (10 ml). After the solution was stirred for 10 minutes at room temperature, Davison 948 silica (dried at 800°C, 2.0 g) was added over 5 minutes. Additional toluene (5 ml) was added to wash down the sides of the reaction flask. After 15 minutes, the solvent was evaporated in vacuo while heating to 90°C. The yield of catalyst was 4.44 g.

### Polymerization with Supported Compound 15

44 mg of supported compound 15 slurried in hexane (2 ml) was flushed with propylene (250 ml) into a 2 liter autoclave, previously flushed with nitrogen, heated to 65°C and containing triethylaluminum (0.5 ml of a 1 M solution in hexane) and propylene (1000 ml). The reaction was run for 1 hour. The autoclave was cooled and vented and the polymer product dried in vacuo. The yield of propylene was 75 g. This material had a melt-flow rate of 0.6, a weight average molecular weight of 438,000, and a molecular weight distribution of 2.17.

### D. Synthesis of rac-Dimethylsilandiyl-bis(2-methyl-4-phenyl-indenyl)zirconium dichloride Synthesis of (+)-2-(2-Phenyl-benzyl)propionic acid (16)

To 6.5 g (0.285 mol) sodium in 160 ml dry ethanol 48.6 g (0.279 mol) diethyl-methylmalonate was added at room temperature. 70.4 g (0.285 mol) 2-phenyl-benzyl bromide was added to the stirred reaction mixture at such a rate, that the heat of reaction maintained the system at gentle reflux. Stirring at reflux was continued for 3 hours. 200 ml of water and 56 g (1 mol) potassium hydroxide were added and the reaction mixture was heated to reflux for 4 hours. The solvents were distilled off, water was added until the residue was completely dissolved and concentrated HCL was added to adjust the pH to 1. The precipitate was collected on a filter, dried and heated in a flask to 130°C. The acid then employed as is. Yield (58 g, 85%) . 1H-NMR (CDCL₃, 100 MHz): 11.7 (s,1H,COOH), 7.1 - 7,5 (m,9H,arom. H), 2.3 - 3.2 (m,3H, CH and CH₂), 0.9 (d, 3H, CH₃).

### Synthesis of (+)-2-Methyl-4-phenyl-1-indanone (17)

A solution of 58 g (0,242 mol) of 16 in 60 ml (0,83 mol) thionyl chloride was stirred 18 hr at room temperature. The excess of thionyl chloride was distilled off, 100 mls of toluene were added three times and removed in vacuo.

The solution of the acid chloride in 150 ml dry toluene was added at 10°C to a stirred suspension of 48 g (0.363 mol) aluminum trichloride in 400 ml dry toluene over a period of 1 hour. After heating to 80°C for 3 hours the mixture was poured over 500 g ice, acidified with concentrated HCL to pH = 1 and extracted with 200 ml diethyl ether three times. The combined organic layers were washed with a saturated aqueous NaHCO₃-solution and brine. The solvents were removed under vacuo. The indanone 17 was used without further purification. Yield (50 g,93%)
¹H-NMR (CDCl₃, 100 MHz): 7.2-7.8 (m, 8H, arom. H), 3.3 (dd, 1H, H-C(3), 2.5-2.9 (m, 2H, H'-C(3) and H-C(2)), 1.3 (dd, 3H, CH₃).

### Synthesis of 2-Methyl-7-phenyl-indene (18)

50 g (0.226 mol) of 17 in 450 ml THF/methanol (2:1) was treated at 0°C with 12.8 g (0.34 mol) sodium borohydride in portions. The reaction mixture was stirred at room temperature for 16 hours. The mixture was poured on 500 g ice, acidified with concentrated HCL to pH =1 and extracted three times with 200 ml diethyl ether. The combined organic layers were washed with brine and dried over MgSO₄. After removal of the solvent the residue was heated to reflux in 1000 ml toluene containing 2 g p-toluenesulfonic acid monohydrate for 2 hours. To remove the acidic catalyst the mixture was washed with 200 ml of a saturated aqueous NaHCO3-solution. After removal of the solvent and chromatography over silica gel (hexane/CH₂Cl₂ 9:1) the indene 18 was obtained as a colorless oil. Yield (42 g, 90%).
¹H-NMR (CDCl₃, 100 MHz): 7.0 -7.6 (m, 8H, arom. H), 6.5 (m, 1H, H-C(3)), 3.4 (s, 2H, CH₂), 2.1 (sa, 3H, CH₃).

### Synthesis of Dimethyl-bis(2-methyl-phenyl-indenyl)silane (19)

To a solution of 15 g (73 mmol) of 18 in 200 ml dry toluene and 10 ml dry THF under an argon atmosphere 29 ml (73 mmol) of a 2.5 M solution of butyllithium in hexane was added at room temperature. After stirring at 80°C for 1 hour the reaction mixture was cooled to 0°C and 4.7 g (36.5 mmol) dimethylsilane dichloride was added. The mixture was heated to 80°C for 1 hour and after the reaction was complete 100 ml of water was added. The organic layer was separated, the solvent was removed under vacuo and the residue purified by chromatography over silica gel (hexane/CH₂Cl₂ 9:1). Yield (12 g, 70%).
¹H-NMR (CDCl₃, 100 MHz). 7.1 -7.7 (m, 16H, arom. H), 6.8 (m, 2H, H-C(3)), 3.8 (s, 2H, H-C(1)), 2.2 (s, 6H, CH₃), -0,2 (m,6H, CH₃Si).

### Synthesis of rac-Dimethylsilandiyl-bis(2-methyl-4-phenyl-indenyl)zirconium dichloride (20)

To a solution of 6g (13 mmol) of 19 in 100 ml dry toluene under an argon atmosphere 10.6 ml (26 mmol) of a 2.5 M solution of butyllithium in hexane was added at room temperature. After stirring at reflux for 3 hour the reaction mixture was cooled to -25°C and 3.2 g (13.6 mmol) zirconium tetrachloride was added. The reaction mixture was allowed to warm to room temperature over a period of 2 hours. The suspension was filtered over a G3-schlenck frit and the residue was washed with 50 ml dry toluene. The solvent of the combined extracts was removed under vacuo. 9.0 g of the complex were obtained as a 1:1 mixture of the racemic and the meso-form. 2.74 g (33%) of the pure racemate were obtained after fractional crystallization of the 1:1-mixture from dry CH₂Cl₂. ¹H-NMR (CDCl₃, 100 MHz): 7.0 - 7.7 (m, 16 H, arom. H), 6.9 (s, 2H, H-C(3)), 2.2 (s, 6H, CH₃), 1.3(m, 6H, CH₃Si). MS (EI) 626 (⁹⁰Zr³⁵Cl₂).

### Supporting Catalyst Compound 20

To a filtered solution of compound 20 (0.05 g) in toluene (75 ml) the MAO slurry (30% MAO in toluene, 5.3 ml) was added with stirring. After five minutes the solution was red-orange and slightly hazy. To this was added dehydrated silica (6.0 g, Davison 948 regular, 800°C dehydration) and stirred fifteen minutes. The resultant slurry was evaporated on a rotoevaporator at 44°C over twenty five minutes at which point the slurry had reach to a 'mud' stage. After an additional thirty five minutes drying at 46°C the solid were recovered as a light orange solid (7.2g)

### Polymerization with Compound 20

In a clean, dry two litre autoclave which had been flushed with propylene vapor, TEAL (0.8 ml, 1.5 M in heptane) was added and then the reactor closed and filled with 750 ml liquid propylene. With the reactor temperature at 30°C the supported catalyst 20 (as a wt% oil slurry) was washed in via an addition tube with 250 ml propylene. The reactor was rapidly heated to 65°C. After thirty minutes the reactor was cooled and the excess propylene vented. Inspection of the interior of the reactor revealed it to be clean and free of fouling. Isotactic polypropylene was removed and dried. Catalyst activity = 0.37 kg/g/hr, DSC Mp = 150°C, weight average MW = 748000 g/m, MWD = 2.2.

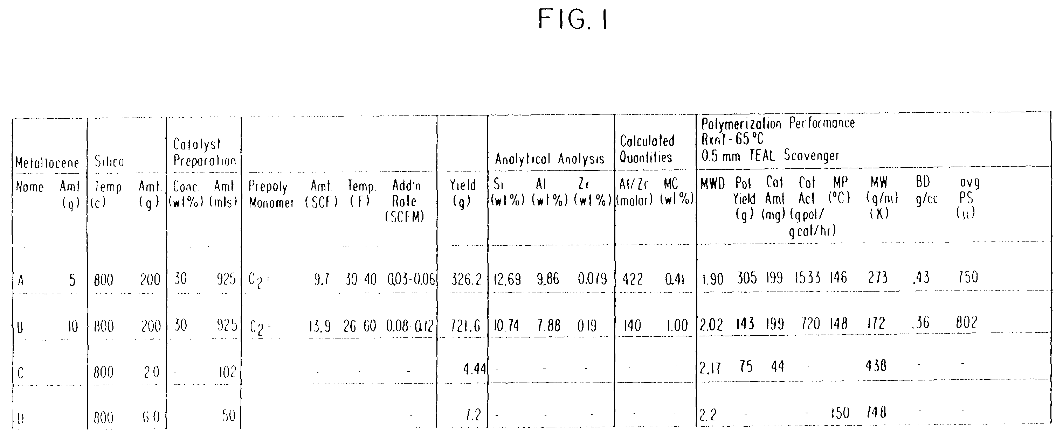

## Claims

1. A supported catalyst system prepared by the method comprising:
(a) supporting on an inorganic porous support the reaction product of one or more metallocene(s) and alumoxane, said reaction product obtained by contacting said metallocene component(s) and alumoxane in a suitable solvent, said metallocene represented by the general formula: 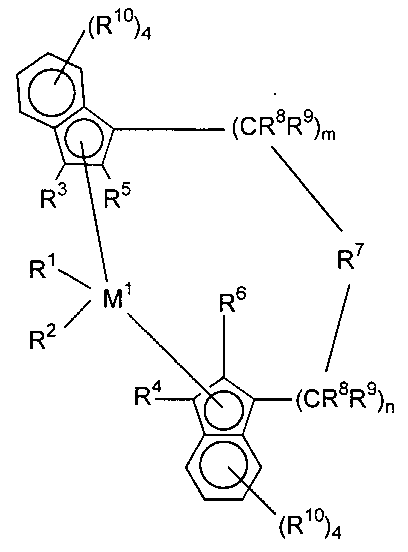 wherein
M¹ is a metal of group 4, 5, or 6 of the Periodic Table,
R¹ and R² are identical or different, are one of a hydrogen atom, a C₁-C₁₀ alkyl group, a C₁-C₁₀ alkoxy group, a C₆-C₁₀ aryl group, a C₆-C₁₀ aryloxy group, a C₂-C₁₀ alkenyl group, a C₇-C₄₀ arylalkyl group, C₇-C₄₀ alkylaryl group, a C₈-C₄₀ arylalkenyl group, or a halogen atom;
R³ and R⁴ are hydrogen atoms;
R⁵ and R⁶ are identical or different, preferably identical, are one of a halogen atom, a C₁-C₁₀ alkyl group, which may be halogenated, C₆-C₁₀ aryl group, which may be halogenated, a C₂-C₁₀ alkenyl group, a C₇-C₄₀ arylalkyl group, a C₇-C₄₀ alkylaryl group, a C₈-C₄₀ arylalkenyl group, a -NR₂¹⁵, -SR¹⁵, -OR¹⁵, -OSiR₃¹⁵ or -PR₂¹⁵ radical, wherein R¹⁵ is one of a halogen atom, a C₁-C₁₀ alkyl group, or a C₆-C₁₀ aryl group;
R⁷ is 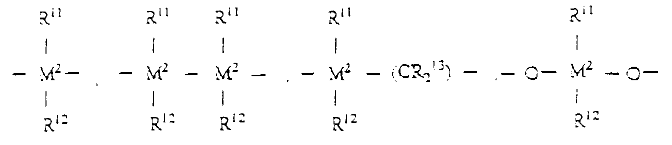 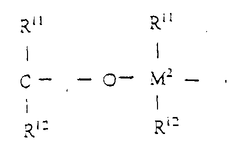 =BR^{11,}=AlR¹¹, -Ge-, -Sn-, -O-, -S-, = SO, =SO₂, =NR¹¹, =CO, PR¹¹, or =P(O)R¹¹;
wherein:
R¹¹, R¹² and R¹³ are identical or different and are a hydrogen atom, a halogen atom, a C₁-C₂₀ alkyl group, a C₁-C₂₀ fluoroalkyl group, a C₆-C₃₀ aryl group, a C₆-C₃₀ fluoroaryl group, a C₁-C₂₀ alkoxy group, a C₂-C₂₀ alkenyl group, a C₇-C₄₀ arylalkyl group, a C₈-C₄₀ arylalkenyl group, C₇-C₄₀ alkylaryl group, or R¹¹ and R¹², or R¹¹ and R¹³, together with the atoms binding them, can form ring systems;
M² is silicon, germanium or tin;
R⁸ and R⁹ are identical or different and have the meanings as stated for R¹¹;
m and n are identical or different and are zero, 1 or 2, m plus n being zero, 1 or 2; and
the radicals R¹⁰ are identical or different and have the meanings stated for R¹¹, R¹² and R¹³ wherein further two adjacent R¹⁰ radicals can be joined together to form a ring system; and
(b) optionally prepolymerizing the catalyst system in the presence of olefinic monomer(s).

2. The catalyst system of claim 1 wherein the catalyst system is prepolymerized with olefinic monomer.

3. The catalyst system of any preceding claim wherein m=n=0 and M²=silicon.

4. The catalyst system of any preceding claim wherein R⁵ = R⁶ = C1-C₁₀ alkyl.

5. The catalyst system of any preceding claim wherein three of the R¹⁰ radicals = hydrogen and one is a C₆-C₃₀ aryl group.

6. The catalyst system of any preceding claims wherein two adjacent R¹⁰ radicals form a fused 4,5-benzo ring and the other two R¹⁰ radicals are hydrogen.

7. The catalyst system of an preceding claims wherein at least one of the R¹⁰ radicals is C₁-C₁₀ alkyl.

8. The catalyst system of any preceding claims wherein the metallocene component is selected from the group consisting essentially of:
rac-dimethylsilandiylbis(2-methyl-4,5-benzoindenyl)- zirconium dichloride;
rac-dimethylsilandiylbis(2-methylindenyl)- zirconium dichloride;
rac-dimethylsilandiylbis(2-methyl-4,6-diisopropylindenyl)- zirconium dichloride; and
rac-dimethylsilandiylbis(2-methyl-4-phenylindenyl)zirconium dichloride;

9. The catalyst system of any preceding claim wherein the olefinic monomer(s) comprises ethylene.

10. The catalyst system of claims 1-8 wherein the olefinic monomer(s) comprises propylene.

11. The catalyst system of claims 1-8 wherein the olefinic monomer(s) comprises at least two different monomers having from 2-8 carbon atoms.

12. The catalyst system of any preceding claim wherein the olefinic monomer(s) comprises from 10% to 1000% of the weight of the non-prepolymerized supported catalyst weight.

13. The catalyst system of claim 12 wherein the olefinic monomer(s) comprises 100% to 300% of the weight of the non-prepolymerized supported catalyst weight.

14. The catalyst system of any preceding claim wherein the molar ratio of aluminium, of the alumoxane, to metal, of the metallocene, is 12:1 to 1000:1.

15. The catalyst of claim 14 wherein the ratio is 50:1 to 500:1.

16. A process for the preparation of a homo- or copolymer or propylene which has a molecular weight of 100000 grams/mole or greater, a melting point of 140°C or greater, a bulk density of 0.30 g/cm³ or greater by polymerization of propylene or copolymerization of mixtures of propylene and one or more other olefins, at a polymerization reaction temperature of 45°C or greater, at a polymerization pressure of from 0.5-100 bar, in gas phase, bulk, or slurry polymerization in the presence of (a) reaction product of one or more metallocene(s) and alumoxane, said reaction product obtained by contacting said metallocene component(s) and alumoxane in a suitable solvent, said metallocene represented by the general formula: 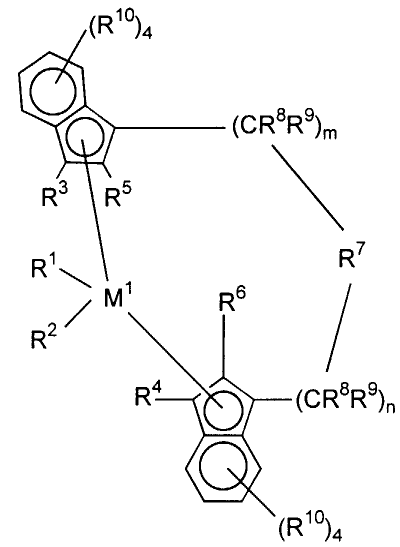 wherein:
M¹ is a metal of group 4, 5, or 6 of the Periodic Table,
R¹ and R² are identical or different, are one of a hydrogen atom a C₁-C₁₀ alkyl group, a C₁-C₁₀ alkoxy group, a C₆-C₁₀ aryl group, a C₆-C₁₀ aryloxy group, a C₂-C₁₀ alkenyl group, a C₇-C₄₀ arylalkyl group, a C₇-C₄₀ alkylaryl group a C₈-C₄₀ arylalkenyl group, or a halogen atom;
R³ and R⁴ are hydrogen atoms;
R⁵ and R⁶ are identical or different, preferably identical, are one of a halogen atom, a C₁-C₁₀ alkyl group, which may be halogenated, a C₆-C₁₀ aryl group, which may be halogenated, a C₂-C₁₀ alkenyl group, a C₇-C₄₀ arylalkyl group, a C₇-C₄₀ alkylaryl group, a C₈-C₄₀ arylalkenyl group, a -NR₂¹⁵, -SR¹⁵, OR¹⁵, -OSiR₃¹⁵ or -PR₂¹⁵ radical, wherein R¹⁵ is one of a halogen atom, a C₁-C₁₀ alkyl group, or a C₆-C₁₀ aryl group;
R⁷ is 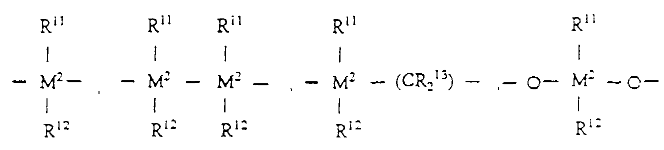 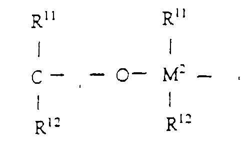 =BR^{11,}=AlR¹¹, -Ge-. -Sn-, -O-, -S-, = SO, =SO₂, =NR¹¹, =CO, PR¹¹, or =P(O)R¹¹;
wherein:
R¹¹, R¹² and R¹³ are identical or different and are a hydrogen atom, a halogen atom, a C₁-C₂₀ alkyl group, a C₁-C₂₀ fluoroalkyl group, a C₆-C₃₀ aryl group, a C₆-C₃₀ fluoroaryl group, a C₁-C₂₀ alkoxy group, a C₂-C₂₀ alkenyl group, a C₇-C₄₀ arylalkyl group, a C₈-C₄₀ arylalkenyl group, C₇-C₄₀ alkylaryl group, or R¹¹ and R¹², or R¹¹ and R¹³, together with the atoms binding them, can form ring systems;
M² is silicon, germanium or tin;
R⁸ and R⁹ are identical or different and have the meanings as stated for R¹¹;
m and n are identical or different and are zero, 1 or 2, m plus n being zero, 1 or 2; and
the radicals R¹⁰ are identical or different and have the meanings stated for R¹¹, R¹² and R¹³ wherein further two adjacent R¹⁰ radicals can be joined together to form a ring system;
(b) an inorganic porous support; and
(c) optionally prepolymerized olefinic monomer(s).

17. The process of claim 16 wherein propylene is polymerised to isotactic polypropylene.

18. The process of claims 16 or 17 wherein mixtures of propylene and other polymerizable olefins are polymerized to copolymers of propylene.

19. The process of claim 16 wherein the catalyst system is prepolymerized to produce propylene polymer or copolymers thereof having a molecular weight 100000 or greater, a melting point of 140°C or greater, and a bulk density of 0.30 g/cm³ or greater.

20. A method to produce a supported catalyst system comprising the steps of:
a) forming in a suitable solvent, a metallocene/alumoxane mixture wherein the metallocene component is in accordance with claim 1 or 3-16,
b) contacting the mixture in a suitable solvent with an inorganic porous carrier;
c) removing essentially all the solvent from the resulting slurry;
d) obtaining a supported catalyst system; and
e) optionally prepolymerizing the supported catalyst system with one or more olefinic monomer(s).

## Patentansprüche

1. Trägerkatalysatorsystem, das nach dem Verfahren hergestellt ist, bei dem
(a) auf einen anorganischen porösen Träger das Reaktionsprodukt von einem oder mehreren Metallocen(en) und Alumoxan aufgebracht wird, wobei das Reaktionsprodukt erhalten wird durch Kontaktieren der Metallocenkomponente(n) und des Alumoxans in einem geeigneten Lösungsmittel, wobei das Metallocen durch die allgemeine Formel: 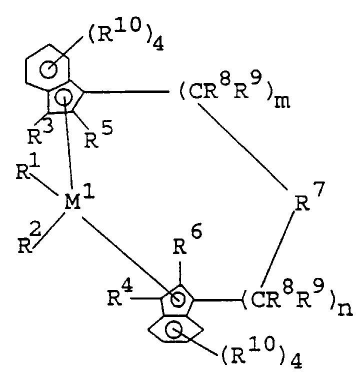 wiedergegeben wird, in der M¹ ein Metall der Gruppe 4, 5 oder 6 des Periodensystems ist;
R¹ und R² gleich oder unterschiedlich und eines aus einem Wasserstoffatom, einer C₁- bis C₁₀-Alkylgruppe, einer C₁- bis C₁₀-Alkoxygruppe, einer C₆- bis C₁₀-Arylgruppe, einer C₆- bis C₁₀-Aryloxygruppe, einer C₂- bis C₁₀-Alkenylgruppe, einer C₇-bis C₄₀-Arylalkylgruppe, einer C₇- bis C₄₀-Alkylarylgruppe, einer C₈- bis C₄₀-Arylalkenylgruppe oder einem Halogenatom ist;
R³ und R⁴ Wasserstoffatome sind;
R⁵ und R⁶ gleich oder unterschiedlich und vorzugsweise gleich und eines aus einem Halogenatom, einer C₁- bis C₁₀-Alkylgruppe, die halogeniert sein kann, einer C₆- bis C₁₀-Arylgruppe, die halogeniert sein kann, einer C₂- bis C₁₀-Alkenylgruppe, einer C₇- bis C₄₀-Arylalkylgruppe, einer C₇- bis C₄₀-Alkylarylgruppe, einer C₈- bis C₄₀-Arylalkenylgruppe, einem -NR₂¹⁵, -SR¹⁵, -OR¹⁵, -OSiR₃¹⁵ oder -PR₂¹⁵ Rest, wobei R¹⁵ eines aus einem Halogenatom, einer C₁- bis C₁₀-Alkylgruppe oder einer C₆- bis C₁₀-Arylgruppe ist, sind;
R⁷ 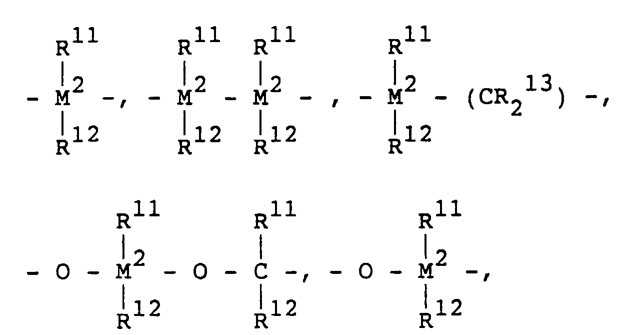 =BR¹¹, =AlR¹¹, -Ge-, -Sn-, -O-, -S-, =SO, =SO₂, =NR¹¹, =CO, PR¹¹ oder =P(O)R¹¹
ist, wobei R¹¹, R¹² und R¹³ gleich oder unterschiedlich sind und ein Wasserstoffatom, ein Halogenatom, eine C₁- bis C₂₀-Alkylgruppe, eine C₁- bis C₂₀-Fluoralkylgruppe, eine C₆- bis C₃₀-Arylgruppe, eine C₆- bis C₃₀-Fluorarylgruppe, eine C₁- bis C₂₀-Alkoxygruppe, eine C₂- bis C₂₀-Alkenylgruppe, eine C₇- bis C₄₀-Arylalkylgruppe, eine C₈- bis C₄₀-Arylalkenylgruppe, eine C₇- bis C₄₀-Alkylarylgruppe sind, oder R¹¹ und R¹² oder R¹¹ und R¹³ zusammen mit den sie verbindenden Atomen Ringsysteme bilden können;
M² Silicium, Germanium oder Zinn ist;
R⁸ und R⁹ gleich oder unterschiedlich sind und die für R¹¹ angegebene Bedeutung haben;
m und n gleich oder unterschiedlich sind und Null, 1 oder 2 sind, wobei m plus n Null, 1 oder 2 ist; und
die Reste R¹⁰ gleich oder unterschiedlich sind und die für R¹¹, R¹² und R¹³ angegebenen Bedeutungen haben, wobei außerdem zwei benachbarte R¹⁰-Reste unter Bildung eines Ringsystems verbunden sein können; und
(b) gegebenenfalls das Katalysatorsystem in Gegenwart von olefinischem Monomer bzw. olefinischen Monomeren präpolymerisiert wird.

2. Katalysatorsystem nach Anspruch 1, bei dem das Katalysatorsystem mit olefinischem Monomer präpolymerisiert ist.

3. Katalysatorsystem nach einem der vorhergehenden Ansprüche, bei dem m = n = 0 und M² = Silicium.

4. Katalysatorsystem nach einem der vorhergehenden Ansprüche, bei dem R⁵ = R⁶ = C₁- bis C₁₀-Alkyl.

5. Katalysatorsystem nach einem der vorhergehenden Ansprüche, bei dem drei der R¹⁰-Reste Wasserstoff sind und einer eine C₆- bis C₃₀-Arylgruppe ist.

6. Katalysatorsystem nach einem der vorhergehenden Ansprüche, bei dem zwei benachbarte R¹⁰-Reste einen kondensierten 4,5-Benzoring bilden und die anderen beiden R¹⁰-Reste Wasserstoff sind.

7. Katalysatorsystem nach einem der vorhergehenden Ansprüche, bei dem mindestens einer der R¹⁰-Reste C₁- bis C₁₀-Alkyl ist.

8. Katalysatorsystem nach einem der vorhergehenden Ansprüche, bei dem die Metallocenkomponente ausgewählt ist aus der Gruppe bestehend im wesentlichen aus rac-Dimenthylsilandiylbis(2-methyl-4,5-benzoindenyl)zirconiumdichlorid; rac-Dimenthylsilandiylbis(2-methylindenyl)zirconiumdichlorid, rac-Dimenthylsilandiylbis(2-methyl-4,6-diisopropylindenyl)zirconiumdichlorid und rac-Dimenthylsilandiylbis(2-methyl-4-phenylindenyl)zirconiumdichlorid.

9. Katalysatorsystem nach einem der vorhergehenden Ansprüche, bei dem das olefinische Monomer bzw. die olefinischen Monomere Ethylen umfassen.

10. Katalysatorsystem nach einem der Ansprüche 1 bis 8, bei dem das olefinische Monomer bzw. die olefinischen Monomere Propylen umfassen.

11. Katalysatorsystem nach einem der Ansprüche 1 bis 8, bei dem das olefinische Monomer bzw. die olefinischen Monomere mindestens zwei unterschiedliche Monomere mit 2 bis 8 Kohlenstoffatomen umfassen.

12. Katalysatorsystem nach einem der vorhergehenden Ansprüche, bei dem das olefinische Monomer bzw. die olefinischen Monomere 10 bis 1000 Gew.% des nicht präpolymerisierten Trägerkatalysatorgewichts umfassen.

13. Katalysatorsystem nach Anspruch 12, bei dem das olefinische Monomer bzw. die olefinischen Monomere 100 bis 300 Gew.% des nicht präpolymerisierten Trägerkatalysatorgewichts umfassen.

14. Katalysatorsystem nach einem der vorhergehenden Ansprüche, bei dem das Molverhältnis von Aluminium des Alumoxans zu Metall des Metallocens 12:1 bis 1000:1 beträgt.

15. Katalysator nach Anspruch 14, bei dem das Verhältnis 50:1 bis 500:1 beträgt.

16. Verfahren zur Herstellung eines Homo- oder Copolymers aus Propylen, das ein Molekulargewicht von 100 000 g/Mol oder mehr, einen Schmelzpunkt von 140°C oder mehr, eine Schüttdichte von 0,30 g/cm³ oder mehr aufweist, durch Polymerisation von Propylen oder Copolymerisation von Mischungen aus Propylen und einem oder mehreren anderen Olefinen bei einer Polymerisationsreaktionstemperatur von 45°C oder mehr, einem Polymerisationsdruck von 0,5 bis 100 bar, in einer Gasphasen-, Massen- oder Aufschlämmungspolymerisation in Gegenwart von
(a) Reaktionsprodukt aus einem oder mehreren Metallocen(en) und Alumoxan, wobei das Reaktionsprodukt durch Kontaktieren der Metallocenkomponente(n) und des Alumoxans in einem geeigneten Lösungsmittel erhalten wurde, wobei das Metallocen durch die allgemeine Formel 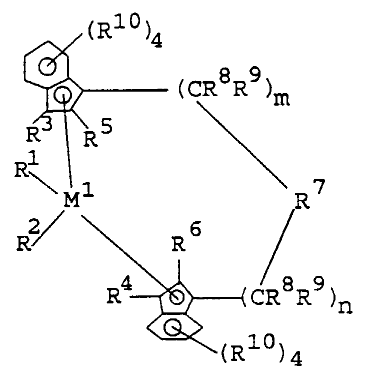 wiedergegeben wird, in der M¹ ein Metall der Gruppe 4, 5 oder 6 des Periodensystems ist;
R¹ und R² gleich oder unterschiedlich und eines aus einem Wasserstoffatom, einer C₁- bis C₁₀-Alkylgruppe, einer C₁- bis C₁₀-Alkoxygruppe, einer C₆- bis C₁₀-Arylgruppe, einer C₆- bis C₁₀-Aryloxygruppe, einer C₂- bis C₁₀-Alkenylgruppe, einer C₇- bis C₄₀-Arylalkylgruppe, einer C₇- bis C₄₀-Alkylarylgruppe, einer C₈- bis C₄₀-Arylalkenylgruppe oder einem Halogenatom ist;
R³ und R⁴ Wasserstoffatome sind;
R⁵ und R⁶ gleich oder unterschiedlich und vorzugsweise gleich und eines aus einem Halogenatom, einer C₁- bis C₁₀-Alkylgruppe, die halogeniert sein kann, einer C₆- bis C₁₀-Arylgruppe, die halogeniert sein kann, einer C₂- bis C₁₀-Alkenylgruppe, einer C₇- bis C₄₀-Arylalkylgruppe, einer C₇- bis C₄₀-Alkylarylgruppe, einer C₈- bis C₄₀-Arylalkenylgruppe, einem -NR₂¹⁵, -SR¹⁵, -OR¹⁵, -OSiR₃¹⁵ oder -PR₂¹⁵ Rest, wobei R¹⁵ eines aus einem Halogenatom, einer C₁- bis C₁₀-Alkylgruppe oder einer C₆- bis C₁₀-Arylgruppe ist, sind;
R⁷ 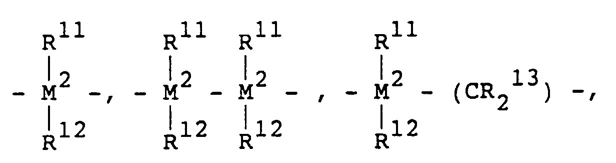 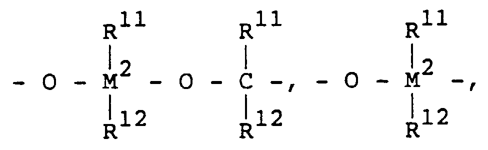 =BR¹¹, =AlR¹¹, -Ge-, -Sn-, -O-, -S-, =SO, =SO₂, =NR¹¹, =CO, PR¹¹ oder =P(O)R¹¹
ist, wobei R¹¹, R¹² und R¹³ gleich oder unterschiedlich sind und ein Wasserstoffatom, ein Halogenatom, eine C₁- bis C₂₀-Alkylgruppe, eine C₁- bis C₂₀-Fluoralkylgruppe, eine C₆- bis C₃₀-Arylgruppe, eine C₆- bis C₃₀-Fluorarylgruppe, eine C₁- bis C₂₀-Alkoxygruppe, eine C₂- bis C₂₀-Alkenylgruppe, eine C₇- bis C₄₀-Arylalkylgruppe, eine C₈- bis C₄₀-Arylalkenylgruppe, eine C₇- bis C₄₀-Alkylarylgruppe sind oder R¹¹ und R¹² oder R¹¹ und R¹³ zusammen mit den sie verbindenden Atomen Ringsysteme bilden können;
M² Silicium, Germanium oder Zinn ist;
R⁸ und R⁹ gleich oder unterschiedlich sind und die für R¹¹ angegebene Bedeutung haben;
m und n gleich oder unterschiedlich sind und Null, 1 oder 2 sind, wobei m plus n Null, 1 oder 2 ist; und
die Reste R¹⁰ gleich oder unterschiedlich sind und die für R¹¹, R¹² und R¹³ angegebenen Bedeutungen haben, wobei außerdem zwei benachbarte R¹⁰-Reste unter Bildung eines Ringsystems verbunden sein können; und
(b) einem anorganischen porösen Träger und
(c) gegebenenfalls präpolymerisiertem olefinischen Monomer oder präpolymerisierten olefinischen Monomeren.

17. Verfahren nach Anspruch 16, bei dem Propylen zu isotaktischem Polypropylen polymerisiert wird.

18. Verfahren nach einem der Ansprüche 16 oder 17, bei dem Mischungen aus Propylen und anderen polymerisierbaren Olefinen zu Copolymeren von Propylen polymerisiert werden.

19. Verfahren nach Anspruch 16, bei dem das Katalysatorsystem präpolymerisiert wird, um Propylenpolymer oder Copolymere desselben mit einem Molekulargewicht von 100 000 oder mehr, einem Schmelzpunkt von 140°C oder mehr und einer Schüttdichte von 0,30 g/cm³ oder mehr herzustellen.

20. Verfahren zur Herstellung eines Trägerkatalysatorsystems, bei dem
a) in einem geeigneten Lösungsmittel eine Metallocen/Alumoxan-Mischung gebildet wird, wobei die Metallocenkomponente gemäß Anspruch 1 oder den Ansprüchen 3 bis 16 ist,
b) die Mischung in einem geeigneten Lösungsmittel mit einem anorganischen porösen Träger kontaktiert wird,
c) im wesentlichen das gesamte Lösungsmittel aus der resultierenden Aufschlämmung entfernt wird,
d) ein Trägerkatalysatorsystem erhalten wird, und
e) gegebenenfalls das Trägerkatalysatorsystem mit einem oder mehreren olefinischen Monomer(en) präpolymerisiert wird.

## Revendications

1. Formulation de catalyseur fixée sur un support, préparée par le procédé comprenant les étapes consistant :
(a) à fixer sur un support consistant en un support inorganique poreux le produit de réaction d'un ou plusieurs métallocènes et d'un alumoxane, ledit produit de réaction étant obtenu en mettant en contact le ou lesdits métallocènes et l'alumoxane dans un solvant convenable, ledit métallocène étant représenté par la formule générale : 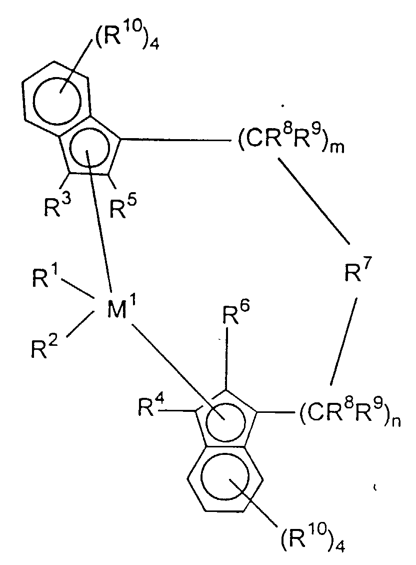 dans laquelle
M¹ représente un métal du groupe 4, 5 ou 6 du Tableau Périodique,
R¹ et R² sont identiques ou différents et sont choisis chacun entre un atome d'hydrogène, un alkyle en C₁ à C₁₀, un groupe alkoxy en C₁ à C₁₀, un groupe aryle en C₆ à C₁₀, aryloxy en C₆ à C₁₀, alcényle en C₂ à C₁₀, un groupe arylalkyle en C₇ à C₄₀, un groupe alkylaryle en C₇ à C₄₀, un groupe arylalcényle en C₈ à C₄₀ et un atome d'halogène ;
R³ et R⁴ représentent des atomes d'hydrogène ;
R⁵ et R⁶ sont identiques ou différents, de préférence identiques, et sont choisis chacun entre un atome d'halogène, un groupe alkyle en C₁ à C₁₀, qui peut être halogéné, un groupe aryle en C₆ à C₁₀, qui peut être halogéné, un groupe alcényle en C₂ à C₁₀, un groupe arylalkyle en C₇ à C₄₀, un groupe alkylaryle en C₇ à C₄₀, un groupe arylalcényle en C₈ à C₄₀, et un radical -NR₂¹⁵, -SR¹⁵, -OR¹⁵, -OSiR₃¹⁵ ou -PR₂¹⁵, dans lequel R¹⁵ représente un atome d'halogène, un groupe alkyle en C₁ à C₁₀ ou un groupe aryle en C₆ à C₁₀ ;
R⁷ représente un groupe 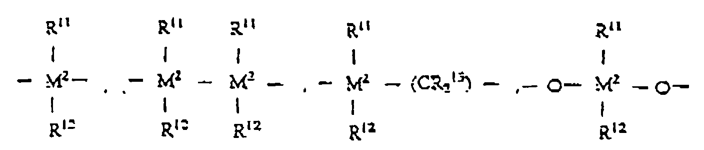 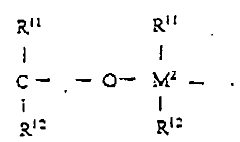 =BR^{11,}=AlR¹¹, -Ge- -Sn-, -O-, -S-, = SO, =SO₂, =NR¹¹, =CO, PR¹¹, ou =P(O)R¹¹;
dans lequel :
R¹¹, R¹² et R¹³ sont identiques ou différents et représentent un atome d'hydrogène, un atome d'halogène, un groupe alkyle en C₁ à C₂₀, un groupe fluoralkyle en C₁ à C₂₀, un groupe aryle en C₆ à C₃₀, un groupe fluoroaryle en C₆ à C₃₀, un groupe alkoxy en C₁ à C₂₀, un groupe alcényle en C₂ à C₂₀, un groupe arylalkyle en C₇ à C₄₀, un groupe arylalcényle en C₈ à C₄₀, un groupe alkylaryle en C₇ à C₄₀, ou bien R¹¹ et R¹², ou R¹¹ et R¹³, conjointement avec les atomes qui les réunissent, peuvent former des systèmes cycliques ;
M² représente le silicium, le germanium ou l'étain ;
R⁸ et R⁹ sont identiques ou différents et ont les définitions indiquées pour R¹¹ ;
m et n sont identiques ou différents et sont égaux à zéro, 1 ou 2, la somme m plus n étant égale à zéro, 1 ou 2 ; et
les radicaux R¹⁰ sont identiques ou différents et ont les définitions indiquées pour R¹¹, R¹² et R¹³, deux radicaux R¹⁰ adjacents pouvant en outre être joints l'un à l'autre en formant un système cyclique ; et
(b) à prépolymériser facultativement la formulation de catalyseur en présence d'un ou plusieurs monomères oléfiniques.

2. Formulation de catalyseur suivant la revendication 1, qui est prépolymérisée avec un monomère oléfinique.

3. Formulation de catalyseur suivant l'une quelconque des revendications précédentes, dans laquelle m et n sont égaux à 0 et M² représente le silicium.

4. Formulation de catalyseur suivant l'une quelconque des revendications précédentes, dans laquelle R⁵ et R⁶ représentent chacun un groupe alkyle en C₁ à C₁₀.

5. Formulation de catalyseur suivant l'une quelconque des revendications précédentes, dans laquelle trois des radicaux R¹⁰ représentent l'hydrogène et un représente un groupe aryle en C₆ à C₃₀.

6. Formulation de catalyseur suivant l'une quelconque des revendications précédentes, dans laquelle deux radicaux R¹⁰ adjacents forment un noyau 4,5-benzocondensé et les deux autres radicaux R¹⁰ représentent l'hydrogène.

7. Formulation de catalyseur suivant l'une quelconque des revendications précédentes, dans laquelle au moins un des radicaux R¹⁰ représente un radical alkyle en C₁ à C₁₀.

8. Formulation de catalyseur suivant l'une quelconque des revendications précédentes, dans laquelle le métallocène est choisi dans le groupe consistant essentiellement entre les suivants :
dichlorure de rac-diméthylsilanediylbis(2-méthyl-4,5-benzoindényl)-zirconium ;
dichlorure de rac-diméthylsilanediylbis(2-méthylindényl)zirconium ;
dichlorure de rac-diméthylsilanediylbis(2-méthyl-4,6-diisopropylindényl)-zirconium ; et
dichlorure de rac-diméthylsilanediylbis(2-méthyl-4-phénylindényl)-zirconium.

9. Formulation de catalyseur suivant l'une quelconque des revendications précédentes, dans laquelle le ou les monomères oléfiniques comprennent l'éthylène.

10. Formulation de catalyseur suivant les revendications 1 à 8, dans laquelle le ou les monomères oléfiniques comprennent le propylène.

11. Formulation de catalyseur suivant les revendications 1 à 8, dans laquelle le ou les monomères oléfiniques comprennent au moins deux monomères différents ayant 2 à 8 atomes de carbone.

12. Formulation de catalyseur suivant l'une quelconque des revendications précédentes, dans laquelle le ou les monomères oléfiniques représentent 10 % à 1000 % du poids du catalyseur fixé sur un support, non prépolymérisé.

13. Formulation de catalyseur suivant la revendication 12, dans laquelle le ou les monomères oléfiniques représentent 100 % à 300 % du poids du catalyseur fixé sur un support, non prépolymérisé.

14. Formulation de catalyseur suivant l'une quelconque des revendications précédentes, dans laquelle le rapport molaire de l'aluminium de l'alumoxane au métal du métallocène est compris dans l'intervalle de 12:1 à 1000:1.

15. Catalyseur suivant la revendication 14, dans lequel le rapport est compris dans l'intervalle de 50:1 à 500:1.

16. Procédé pour la préparation d'un homo- ou copolymère de propylène qui a un poids moléculaire égal ou supérieur à 100 000 grammes/mole, un point de fusion égal ou supérieur à 140°C, une masse volumique apparente égale ou supérieure à 0,30 g/cm³ par polymérisation de propylène ou copolymérisation de mélanges de propylène et d'une ou plusieurs autres oléfines, à une température de réaction de polymérisation égale ou supérieure à 45°C, à une pression de polymérisation de 0,5 à 100 bars, dans une polymérisation en phase gazeuse, en masse ou en suspension en présence (a) du produit de réaction d'un ou plusieurs métallocènes et d'un alumoxane, ledit produit de réaction étant obtenu en mettant en contact ledit ou lesdits métallocènes et l'alumoxane dans un solvant convenable, ledit métallocène étant représenté par la formule générale : 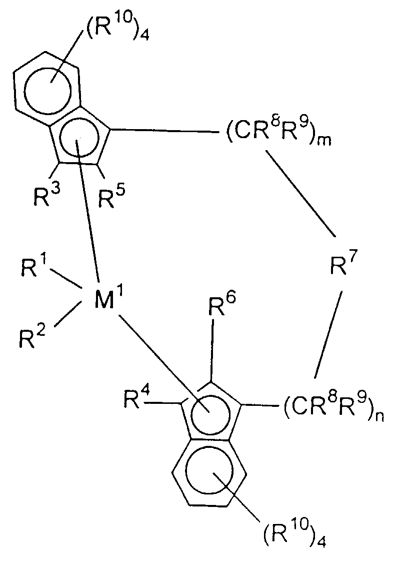 dans laquelle :
M¹ représente un métal du groupe 4, 5 ou 6 du Tableau Périodique,
R¹ et R² sont identiques ou différents et sont choisis chacun entre un atome d'hydrogène, un groupe alkyle en C₁ à C₁₀, un groupe alkoxy en C₁ à C₁₀, un groupe aryle en C₆ à C₁₀, un groupe aryloxy en C₆ à C₁₀, un groupe alcényle en C₂ à C₁₀, un groupe arylalkyle en C₇ à C₄₀, un groupe alkylaryle en C₇ à C₄₀, un groupe arylalcényle en C₈ à C₄₀ et un atome d'halogène ;
R³ et R⁴ représentent des atomes d'hydrogène ;
R⁵ et R⁶ sont identiques ou différents, de préférence identiques, et sont choisis chacun entre un atome d'halogène, un groupe alkyle en C₁ à C₁₀, qui peut être halogéné, un groupe aryle en C₆ à C₁₀, qui peut être halogéné, un groupe alcényle en C₂ à C₁₀, un groupe arylalkyle en C₇ à C₄₀, un groupe alkylaryle en C₇ à C₄₀, un groupe arylalcényle en C₈ à C₄₀, et un radical -NR₂¹⁵, -SR¹⁵, -OR¹⁵, -OSiR₃¹⁵ ou -PR₂¹⁵, dans lequel R¹⁵ est choisi entre un atome d'halogène, un groupe alkyle en C₁ à C₁₀ et un groupe aryle en C₆ à C₁₀ ;
R⁷ représente un groupe 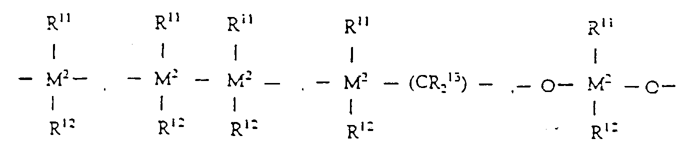 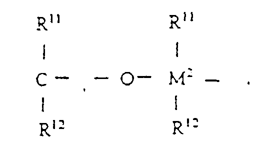 =BR^{11,}=AlR¹¹, -Ge-, -Sn-, -O-, -S-, = SO, =SO₂, =NR¹¹, =CO, PR¹¹, ou =P(O)R¹¹;
dans lequel :
R¹¹, R¹² et R¹³ sont identiques ou différents et représentent un atome d'hydrogène, un atome d'halogène, un groupe alkyle en C₁ à C₂₀, un groupe fluoralkyle en C₁ à C₂₀, un groupe aryle en C₆ à C₃₀, un groupe fluoraryle en C₆ à C₃₀, un groupe alkoxy en C₁ à C₂₀, un groupe alcényle en C₂ à C₂₀, un groupe arylalkyle en C₇ à C₄₀, un groupe arylalcényle en C₈ à C₄₀, un groupe alkylaryle en C₇ à C₄₀, ou bien R¹¹ et R¹², ou R¹¹ et R¹³, conjointement avec les atomes qui les réunissent, peuvent former des systèmes cycliques ;
M² représente le silicium, le germanium ou l'étain ;
R⁸ et R⁹ sont identiques ou différents et ont les définitions indiquées pour R¹¹ ;
m et n sont identiques ou différents et sont égaux à zéro, 1 ou 2, la somme m plus n étant égale à zéro, 1 ou 2 ; et
les radicaux R¹⁰ sont identiques ou différents et ont les définitions indiquées pour R¹¹, R¹² et R¹³, deux radicaux R¹⁰ adjacents pouvant en outre être joints l'un à l'autre pour former un système cyclique ;
(b) d'un support poreux inorganique ; et
(c) d'un ou plusieurs monomères oléfiniques facultativement prépolymérisés.

17. Procédé suivant la revendication 16, dans lequel le propylène est polymérisé en un polypropylène isotactique.

18. Procédé suivant la revendication 16 ou 17, dans lequel des mélanges de propylène et d'autres oléfines polymérisables sont polymérisés en copolymères de propylène.

19. Procédé suivant la revendication 16, dans lequel la formulation de catalyseur est copolymérisé pour produire un polymère de propylène ou des copolymères de propylène ayant un poids moléculaire égal ou supérieur à 100 000, un point de fusion égal ou supérieur à 140°C et une masse volumique apparente égale ou supérieure à 0,30 g/cm³.

20. Procédé pour la production d'une formulation de catalyseur fixée sur un support, comprenant les étapes consistant :
a) à former dans un solvant convenable un mélange métallocène/alumoxane dans lequel le métallocène est un métallocène suivant les revendications 1 ou 3 à 16,
b) à mettre en contact le mélange dans un solvant convenable avec un support poreux inorganique,
c) à éliminer pratiquement la totalité du solvant de la suspension résultante ;
d) à obtenir une formulation de catalyseur fixée sur un support ; et
e) facultativement, à prépolymériser la formulation de catalyseur fixée sur un support avec un ou plusieurs monomères oléfiniques.
